# EUROPEAN PATENT APPLICATION

(11) **EP 4 832 507 A1**
(43) Date of publication of application: **28.10.2026**
(21) Application number: 24907002.0
(22) Date of filing: 13.11.2024
(51) Int. Cl.: H04R 3/00, G06F 3/01, G11B 20/10, G11B 27/00

(54) **INFORMATION PROCESSING DEVICE AND INFORMATION PROCESSING METHOD**

(30) Priority: 19.12.2023 JP 2023213728
(71) Applicant: Sony Group Corporation, Tokyo 108-0075 (JP)
(72) Inventor: SAGANO, Masayuki, Tokyo 108-0075 (JP); HORA, Keiko, Tokyo 108-0075 (JP); KAWANO, Jiro, Tokyo 108-0075 (JP); KASAHARA, Tomoharu, Tokyo 108-0075 (JP); YOSHIDA, Yuya, Tokyo 108-0075 (JP); MATSUI, Takeshi, Tokyo 108-0075 (JP); ITO, Rena, Tokyo 108-0075 (JP); FUJIOKA, Takashi, Tokyo 108-0075 (JP)
(74) Representative: D Young & Co LLP
(86) International application number: PCT/JP2024/040242
(87) International publication number: WO 2025/134614

(57) **Abstract**

An information processing apparatus includes a display section, and a control section. The display section is configured to display visual information related to an application having a video recording function by a camera and a microphone and an editing function for recorded video data by the video recording function in a case where the application is executed. The control section is configured to execute the application, and in a case where a user selects sound source data to be enhanced in sound quality, from the recorded video data via the application, execute sound quality enhancement processing on the sound source data selected; and cause the display section to display an operation component related to the editing function to enable the sound source data including a case of having been subjected to the sound quality enhancement processing and video data included in the recorded video data to be consistently edited.

## Description

### Technical Field

The present disclosure relates to an information processing apparatus and an information processing method.

### Background Art

In recent years, portable information processing apparatuses such as smartphones and tablet terminals have been remarkably widespread. In addition, the processing capabilities of these portable information processing apparatuses are rapidly enhanced, and users can easily produce various media contents such as music and video by themselves using such information processing apparatuses.

In private production of music content, various types of application software (hereinafter referred to as "applications") for music production that operate on an information processing apparatus are often used. Some of these applications for music production have an audio recording function, and the user can freely perform editing work or the like based on sound source data obtained by recording the user's singing or musical instrument playing or sound source data purchased from the outside using such an application.

In addition, some of the applications for music production assist a plurality of users in collaborating in producing music content by enabling sound source data recorded by a plurality of information processing apparatuses to be edited via a network (for example, refer to PTL 1).

### Citation List

### Patent Literature

PTL 1: WO 2019/102730

### Summary

### Technical Problem

However, the user has many opportunities to use a social networking service (SNS), a video streaming service, or the like to publish music content with video produced by recording a scene in which the user actually sings or plays a musical instrument, or the like. The above-described conventional techniques have room for further improvement in terms of further enhancing convenience in producing such music content with video.

Therefore, the present disclosure proposes an information processing apparatus and an information processing method that are capable of further improving convenience when a user produces music content with video.

### Solution to Problem

In order to solve the above-described problems, an information processing apparatus according to one embodiment of the present disclosure includes a display section and a control section. The display section is configured to display visual information related to an application having a video recording function by a camera and a microphone and an editing function for recorded video data by the video recording function in a case where the application is executed, The control section is configured to execute the application, in a case where a user selects sound source data to be enhanced in sound quality, from the recorded video data via the application, execute sound quality enhancement processing on the sound source data selected, and cause the display section to display an operation component related to the editing function to enable the sound source data including a case of having been subjected to the sound quality enhancement processing and video data included in the recorded video data to be consistently edited.

### Brief Description of Drawings

[Fig. 1]

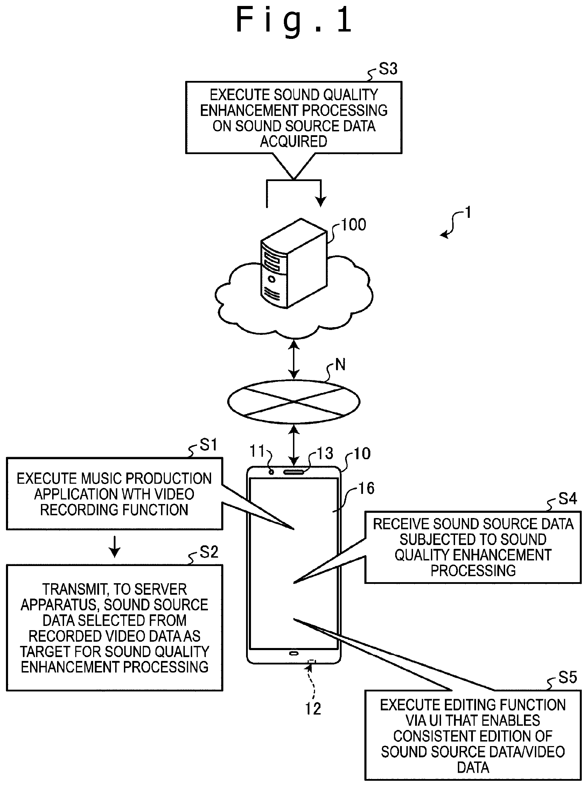

   Fig. 1 is a schematic explanatory diagram of an information processing method according to an embodiment of the present disclosure.
[Fig. 2]

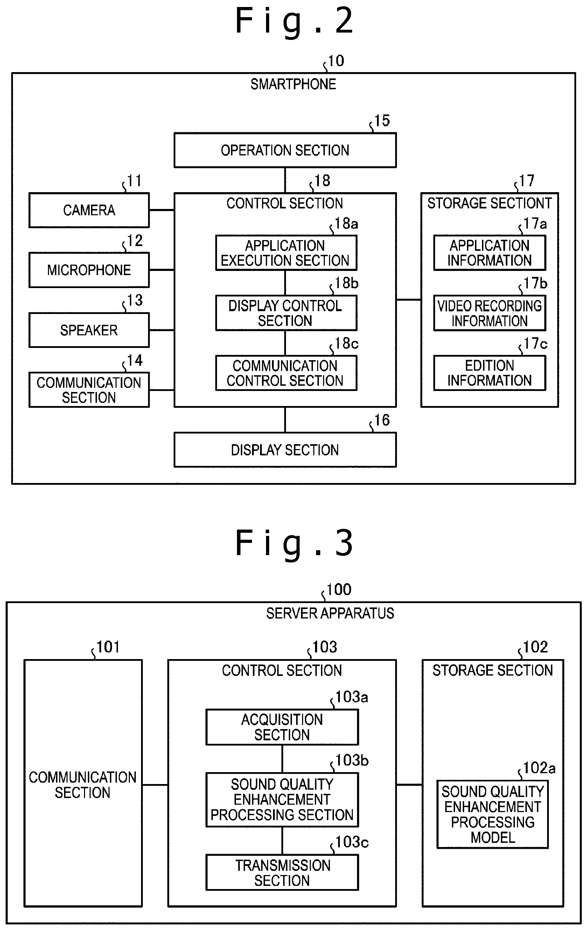

   Fig. 2 is a block diagram illustrating a configuration example of a smartphone according to an embodiment of the present disclosure.
[Fig. 3]
   Fig. 3 is a block diagram illustrating a functional configuration example of a server apparatus according to an embodiment of the present disclosure.
[Fig. 4]

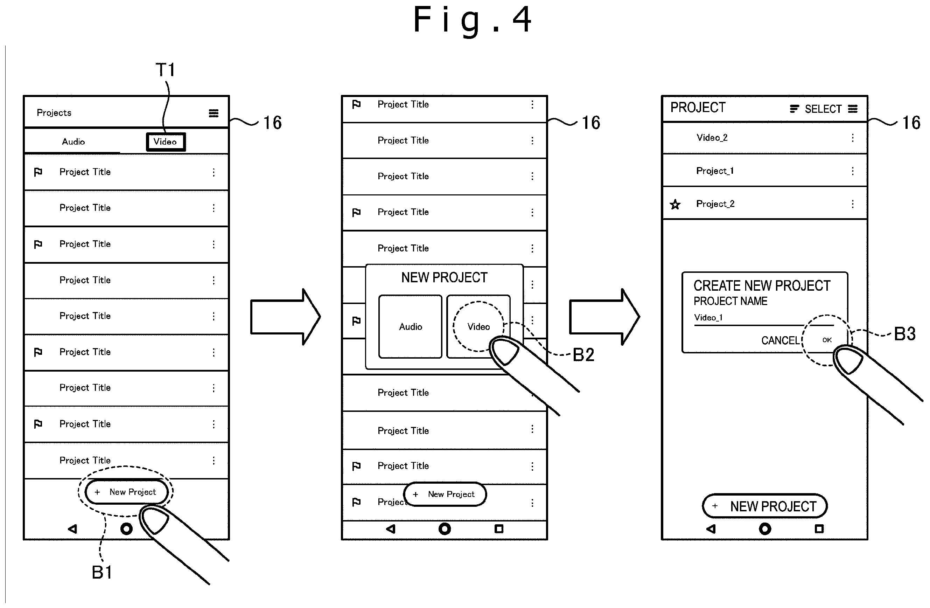

   Fig. 4 is a diagram (part 1) illustrating an example of a UI at the time of video recording.
[Fig. 5]

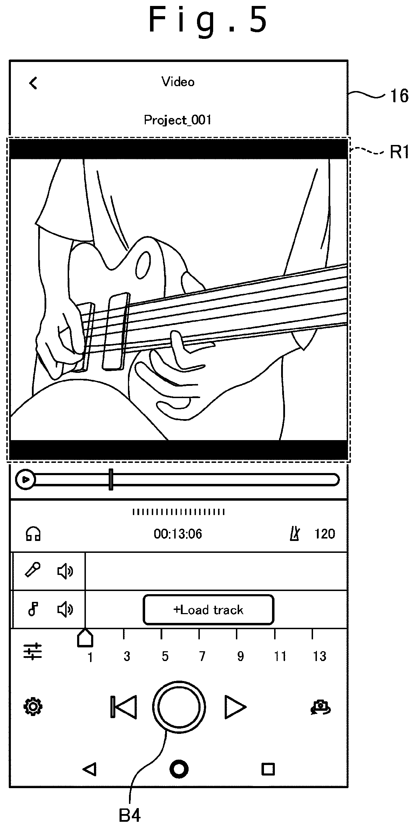

   Fig. 5 is a diagram (part 2) illustrating an example of the UI at the time of video recording.
[Fig. 6]

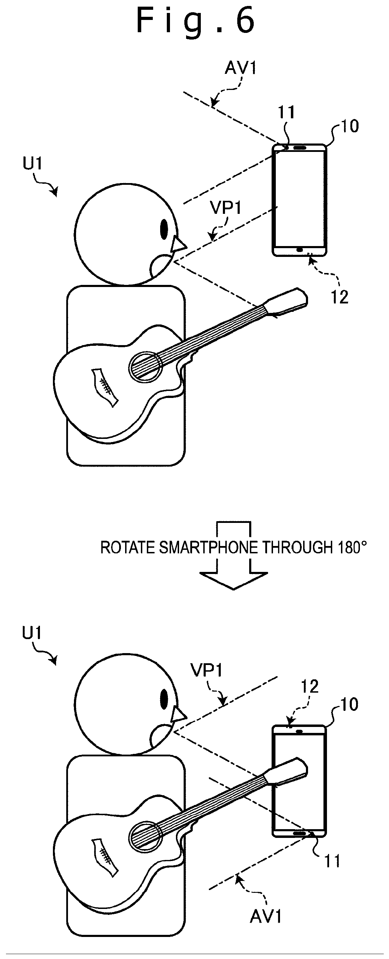

   Fig. 6 is a diagram (part 3) illustrating examples of the UI at the time of video recording.
[Fig. 7]

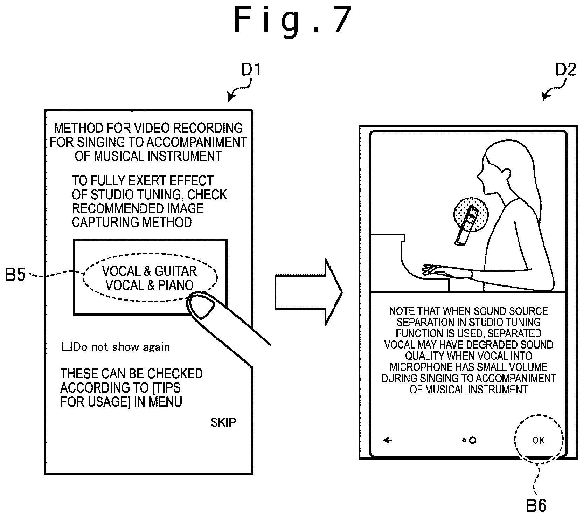

   Fig. 7 is a diagram (part 4) illustrating an example of the UI at the time of video recording.
[Fig. 8]

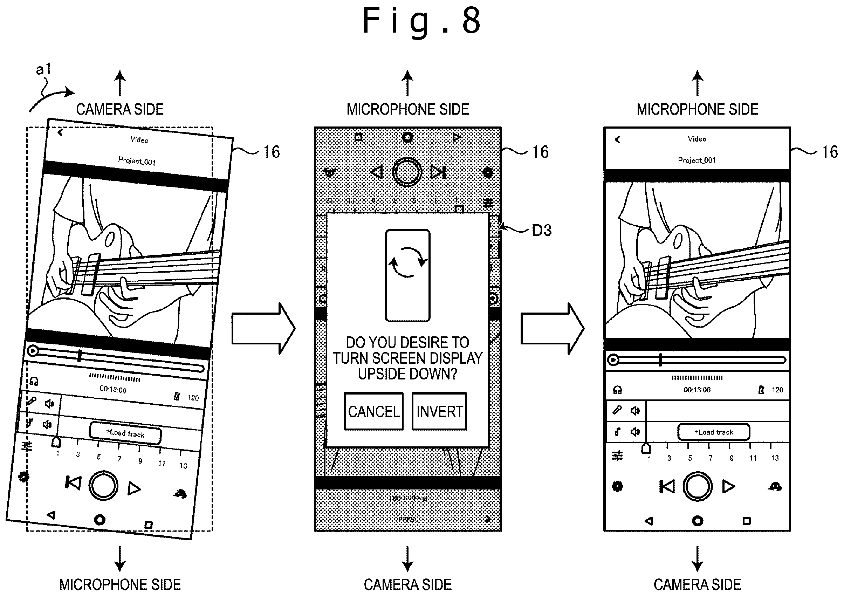

   Fig. 8 is a diagram (part 5) illustrating an example of the UI at the time of video recording.
[Fig. 9]

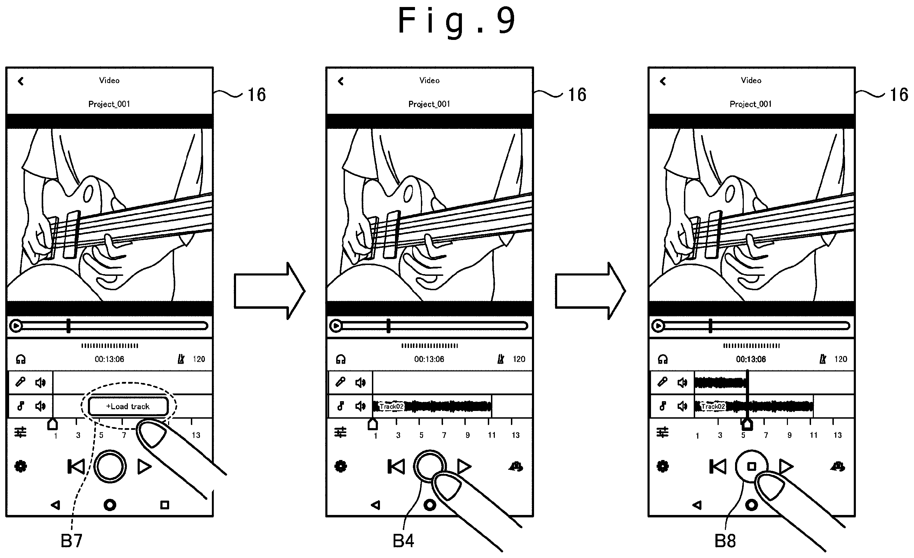

   Fig. 9 is a diagram (part 6) illustrating an example of the UI at the time of video recording.
[Fig. 10]

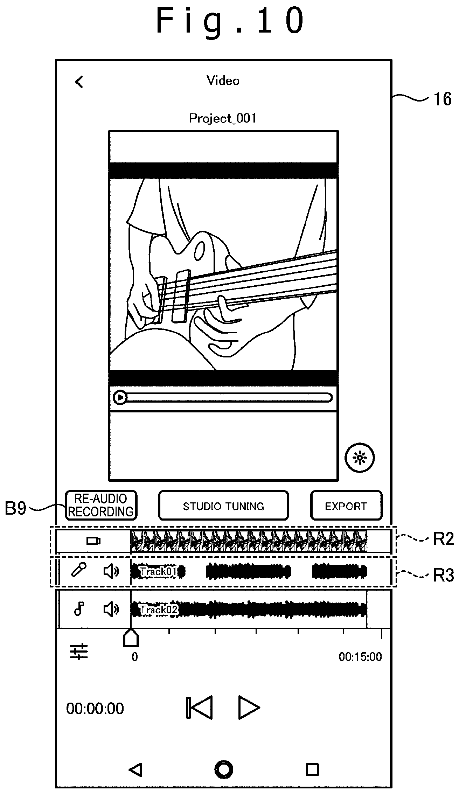

   Fig. 10 is a diagram (part 7) illustrating an example of the UI at the time of video recording.
[Fig. 11]

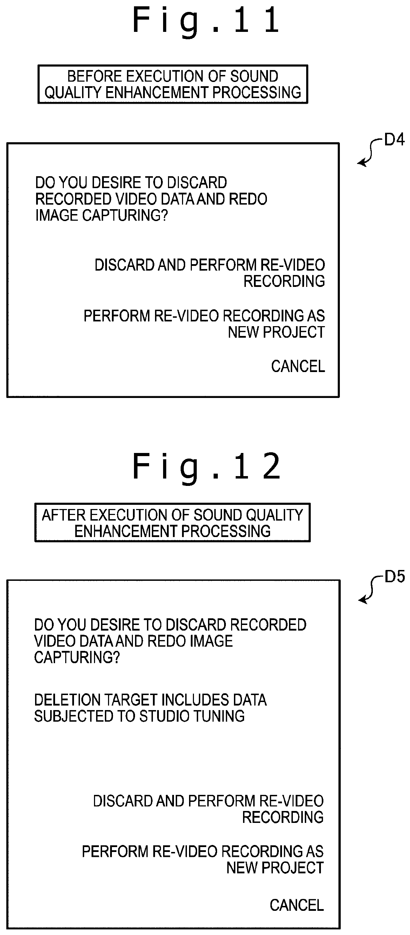

   Fig. 11 is a diagram (part 8) illustrating an example of the UI at the time of video recording.
[Fig. 12]
   Fig. 12 is a diagram (part 9) illustrating an example of the UI at the time of video recording.
[Fig. 13]

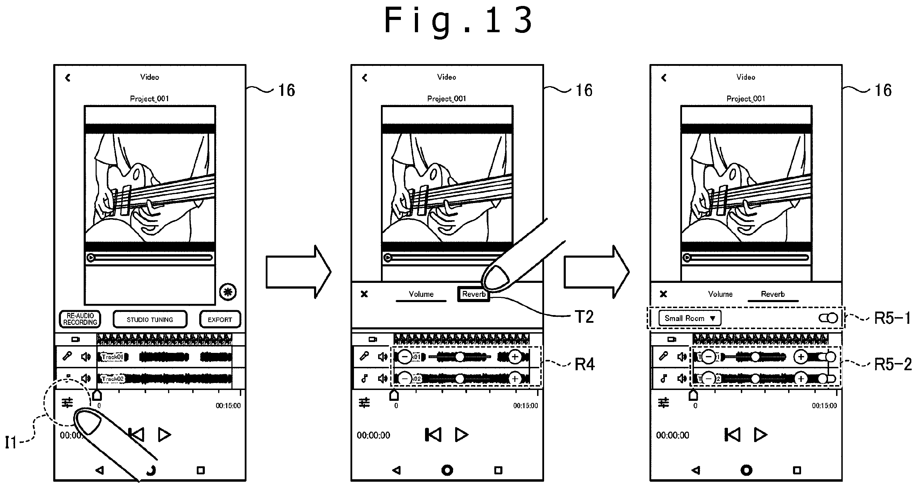

   Fig. 13 is a diagram illustrating an example of a UI at the time of editing.
[Fig. 14]

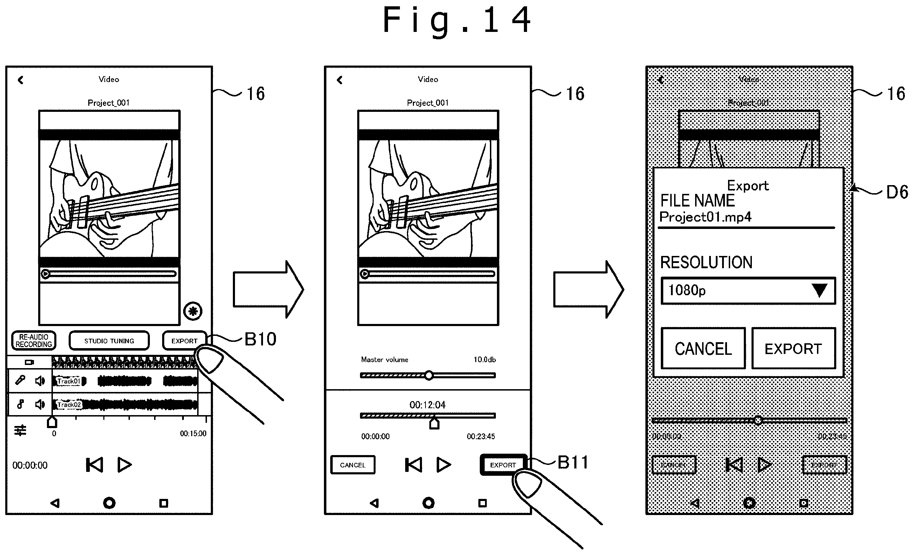

   Fig. 14 is a diagram illustrating an example of a UI at the time of export.
[Fig. 15]

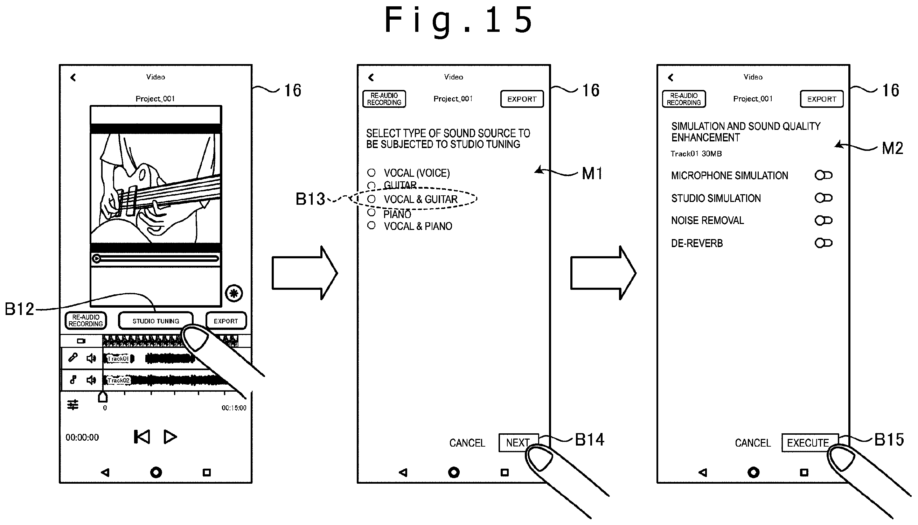

   Fig. 15 is a diagram (part 1) illustrating an example of a UI related to a sound quality enhancement processing function.
[Fig. 16]

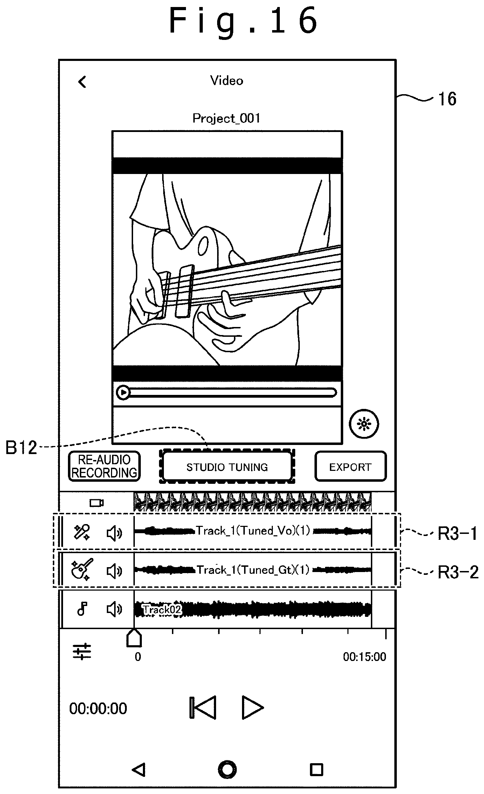

   Fig. 16 is a diagram (part 2) illustrating an example of the UI related to the sound quality enhancement processing function.
[Fig. 17]

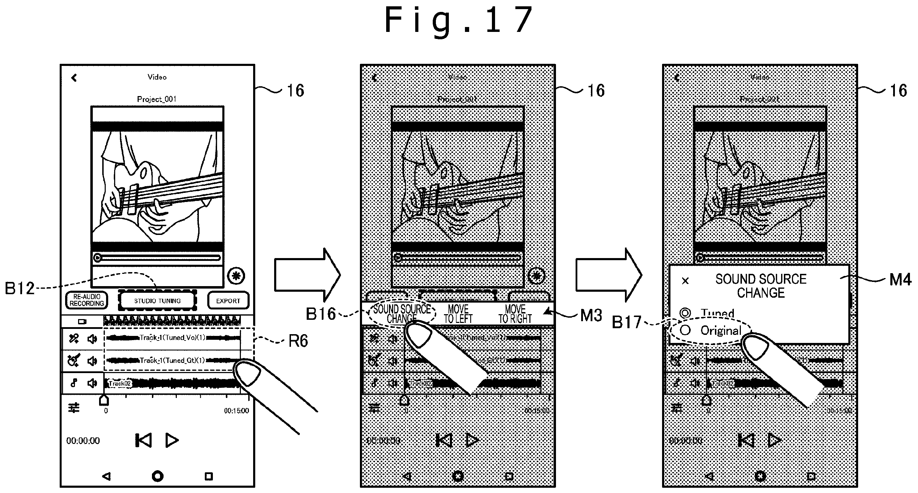

   Fig. 17 is a diagram (part 3) illustrating an example of the UI related to the sound quality enhancement processing function.
[Fig. 18]

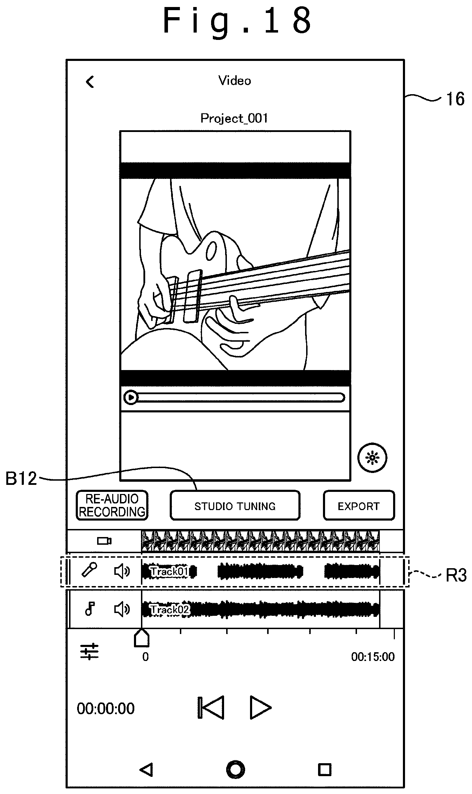

   Fig. 18 is a diagram (part 4) illustrating an example of the UI related to the sound quality enhancement processing function.
[Fig. 19]

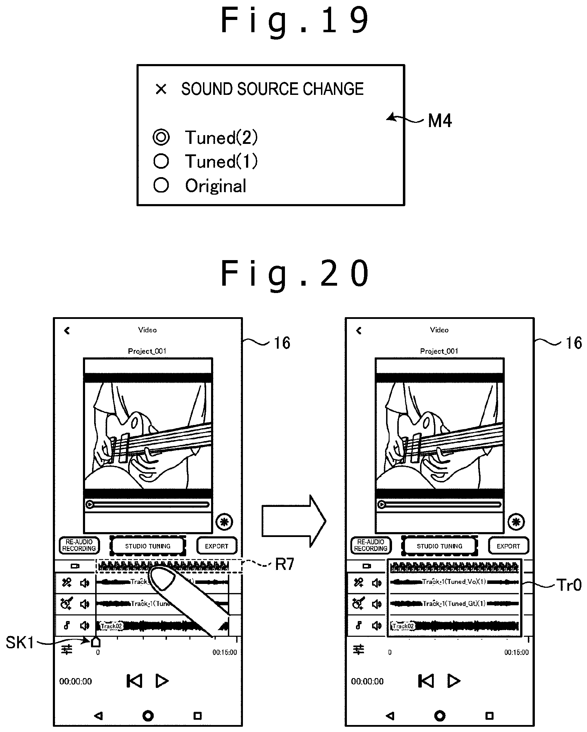

   Fig. 19 is a diagram (part 5) illustrating an example of the UI related to the sound quality enhancement processing function.
[Fig. 20]
   Fig. 20 is a diagram (part 1) illustrating an example of a UI related to a trimming function.
[Fig. 21]

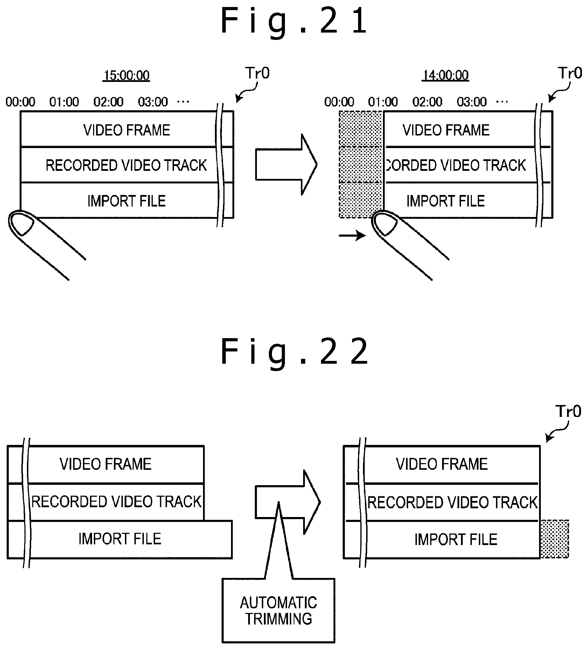

   Fig. 21 is a diagram (part 2) illustrating an example of the UI related to the trimming function.
[Fig. 22]
   Fig. 22 is a diagram (part 3) illustrating an example of the UI related to the trimming function.
[Fig. 23]

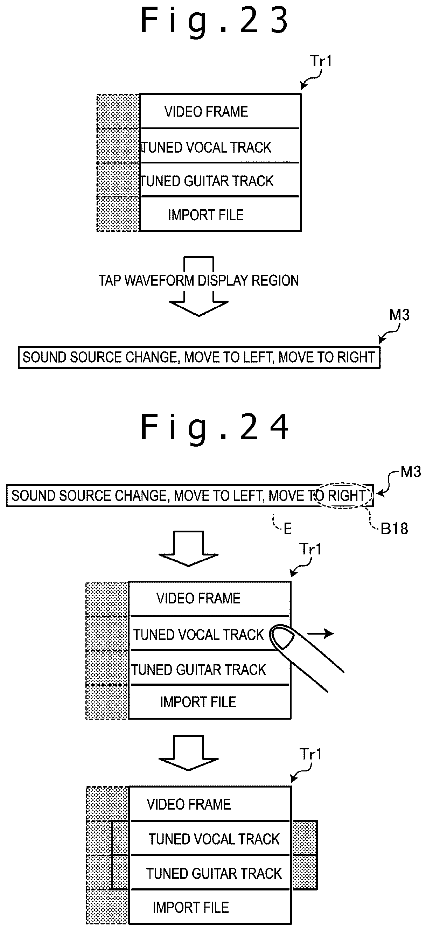

   Fig. 23 is a diagram (part 4) illustrating an example of the UI related to the trimming function.
[Fig. 24]
   Fig. 24 is a diagram (part 5) illustrating an example of the UI related to the trimming function.
[Fig. 25]

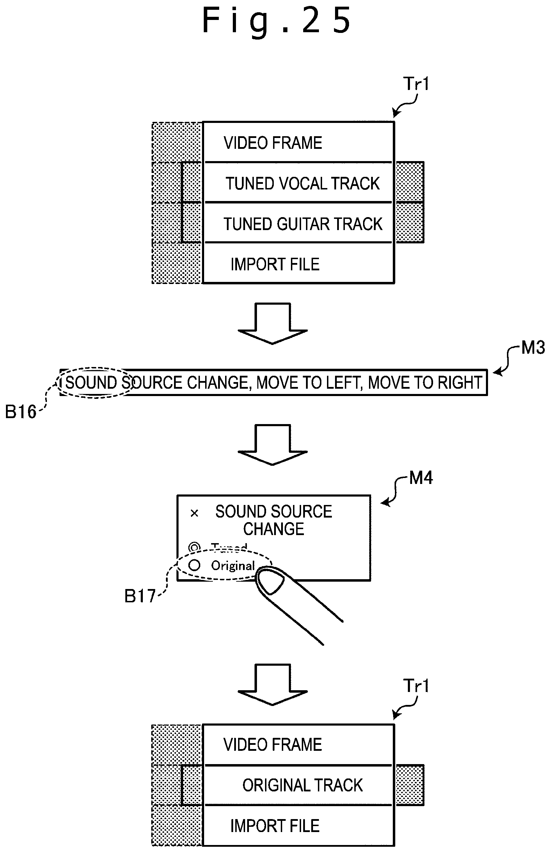

   Fig. 25 is a diagram (part 6) illustrating an example of the UI related to the trimming function.
[Fig. 26]

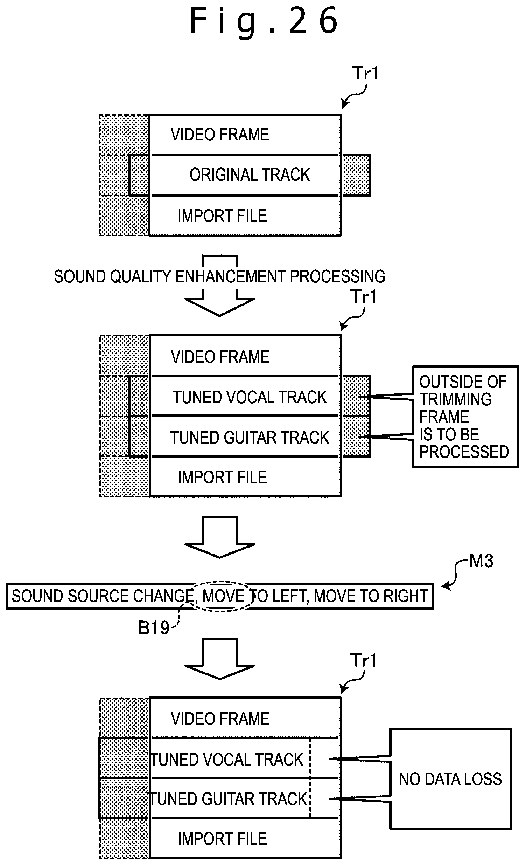

   Fig. 26 is a diagram (part 7) illustrating an example of a UI related to a trimming function.
[Fig. 27]

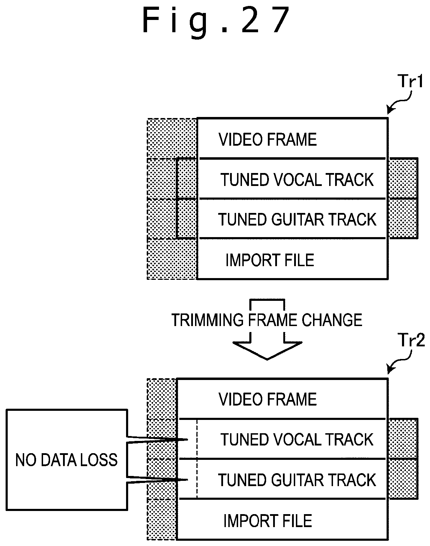

   Fig. 27 is a diagram (part 8) illustrating an example of the UI related to the trimming function.
[Fig. 28]

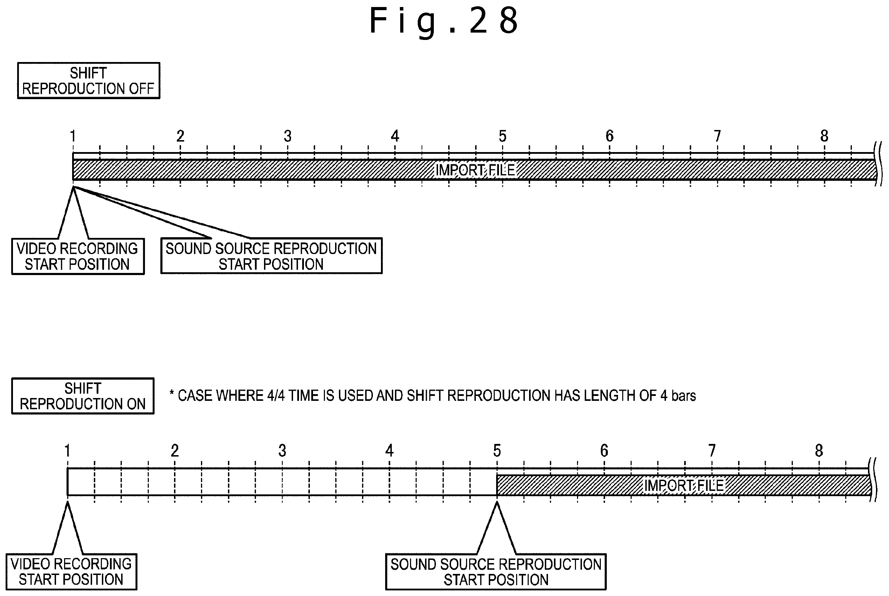

   Fig. 28 is a diagram (part 1) illustrating an example of the UI related to a shift reproduction function.
[Fig. 29]

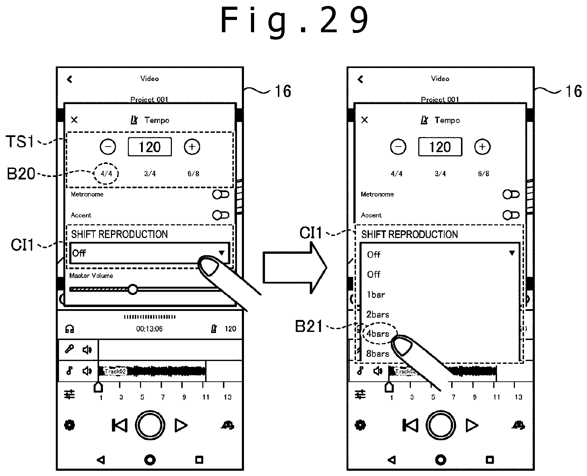

   Fig. 29 is a diagram (part 2) illustrating an example of a UI related to the shift reproduction function.
[Fig. 30]

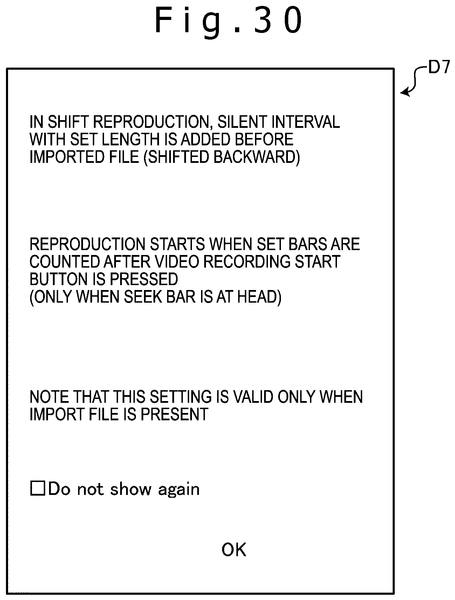

   Fig. 30 is a diagram (part 3) illustrating an example of the UI related to the shift reproduction function.
[Fig. 31]

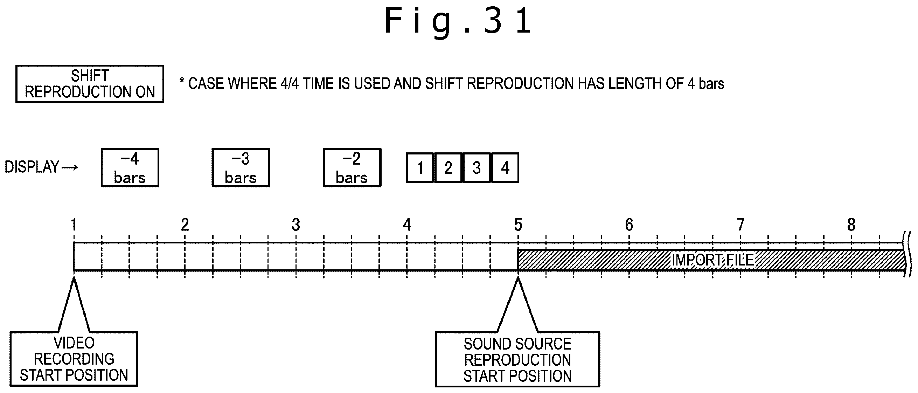

   Fig. 31 is a diagram (part 4) illustrating an example of the UI related to the shift reproduction function.
[Fig. 32]

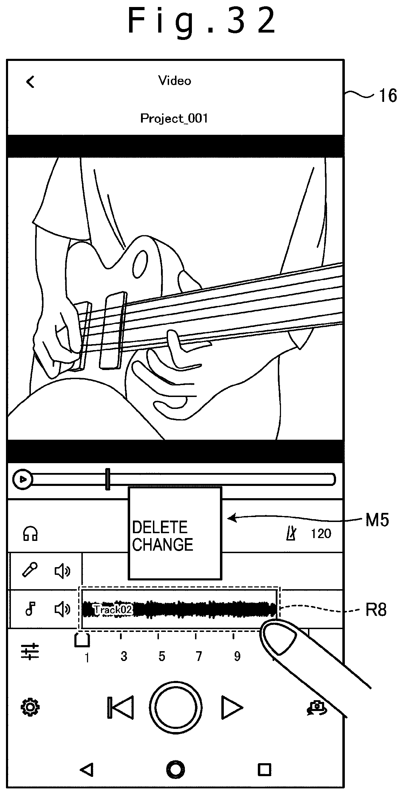

   Fig. 32 is a diagram (part 1) illustrating an example of a UI according to a fifth variation.
[Fig. 33]

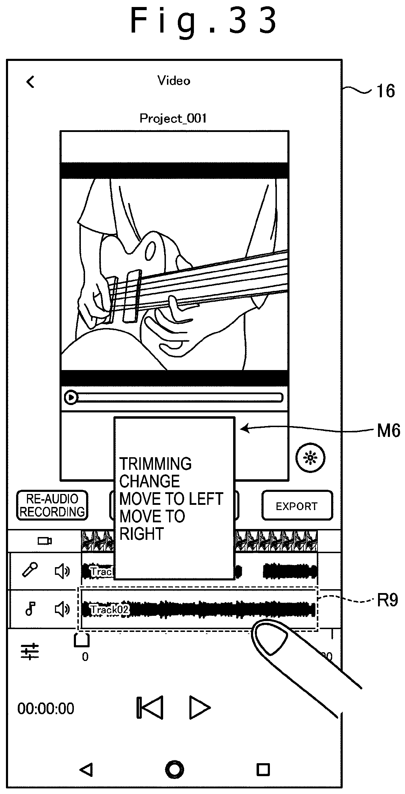

   Fig. 33 is a diagram (part 2) illustrating an example of the UI according to the fifth variation.
[Fig. 34]

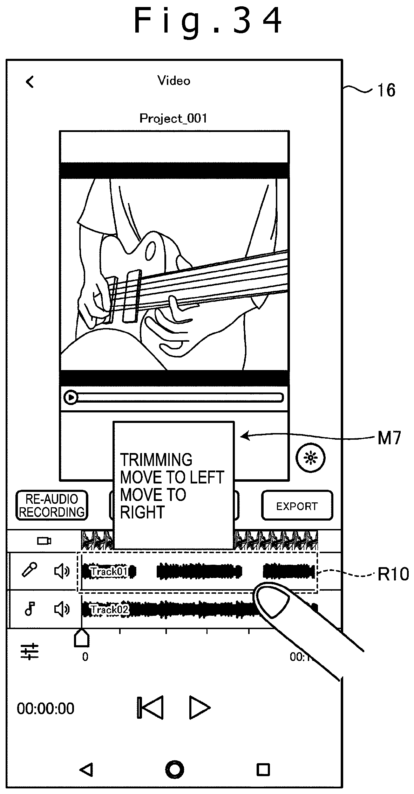

   Fig. 34 is a diagram (part 3) illustrating an example of the UI according to the fifth variation.
[Fig. 35]

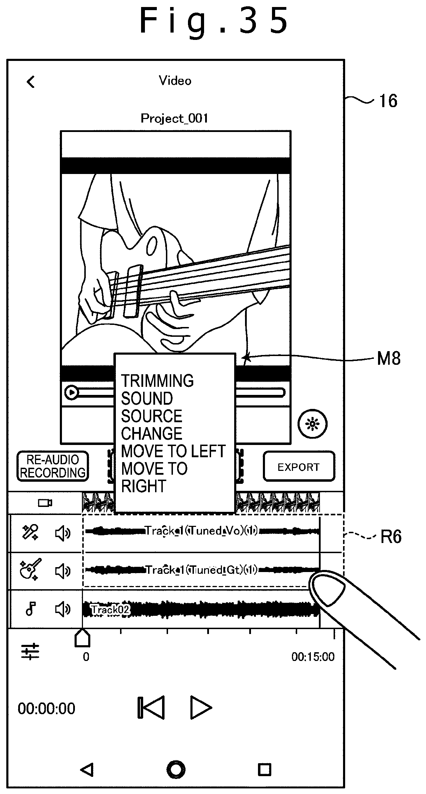

   Fig. 35 is a diagram (part 4) illustrating an example of the UI according to the fifth variation.
[Fig. 36]

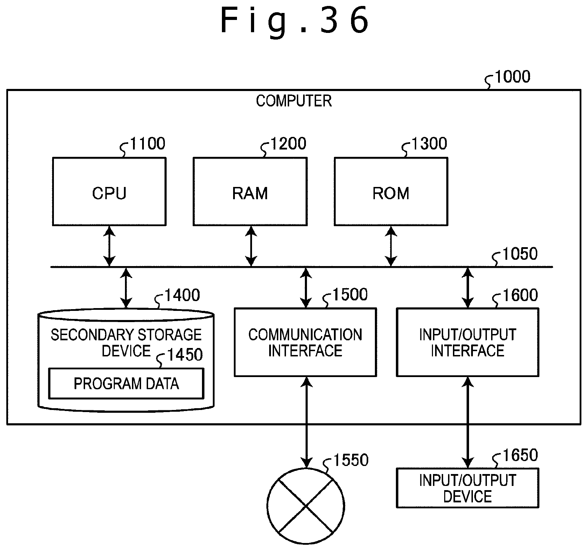

   Fig. 36 is a hardware configuration diagram illustrating an example of a computer that implements the functions of a smartphone.

### Description of Embodiments

Hereinafter, embodiments of the present disclosure will be described in detail with reference to the drawings. Note that, in the following embodiments, the same reference signs are assigned to identical components, and redundant descriptions will be omitted accordingly.

In addition, a main example described below relates to a case where an information processing apparatus according to an embodiment of the present disclosure (hereinafter, appropriately referred to as "the present embodiment") is a smartphone 10 utilized by a user. In addition, hereinafter, an application for music production that operates in the smartphone 10 is referred to as a "music production application". The music production application according to the present embodiment is assumed to have a video recording function.

In addition, hereinafter, among pieces of recorded video data which are recorded by the smartphone 10, video data that is a video portion is referred to as a "video frame" as appropriate. In addition, sound source data that is a sound portion of the recorded video data is referred to as a "track" as appropriate. In addition, the sound source data purchased from the outside and stored in the storage of the smartphone 10 is referred to as an "import file" as appropriate. The import file is, for example, a karaoke sound source.

In addition, in the following description, a function of enhancing the sound quality of a track in the music production application according to the present embodiment is referred to as a sound quality enhancement function. The sound quality enhancement function may be labeled "Studio tuning" or "STUDIO TUNING" in the drawings to be described later. In addition, processing executed by the sound quality enhancement function is referred to as "sound quality enhancement processing".

The present disclosure will be described in the order of the items below.
1. Overview
2. Configuration Example of Smartphone
3. Configuration Example of Server Apparatus
4. Specific Examples of Various UIs at Time of Production of Music Content with Video
   4-1. Basic Example
      4-1-1. At Time of Recording
      4-1-2. At Time of Editing
      4-1-3. At time of Export
   4-2. Sound Quality Enhancement Processing Function
   4-3. Trimming Function
   4-4. Shift Reproduction Function
5. Variations
   5-1. First Variation
   5-2. Second Variation
   5-3. Third Variation
   5-4. Fourth Variation
   5-5. Fifth Variation
   5-6. Sixth Variation
6. Hardware Configuration
7. Conclusion

### 1. Overview

Fig. 1 is a schematic explanatory diagram of an information processing method according to a first embodiment of the present disclosure. The information processing method according to the present embodiment is executed by an information processing system 1. As illustrated in Fig. 1, the information processing system 1 includes a smartphone 10 and a server apparatus 100.

The smartphone 10 is a portable information processing apparatus utilized by a user. The smartphone 10 includes a platform capable of executing a music production application according to the present embodiment.

As illustrated in Fig. 1, the smartphone 10 includes a camera 11, a microphone 12, a speaker 13, and a display section 16. The camera 11 is provided at one end portion (hereinafter, referred to as an "upper portion" as appropriate) of the smartphone 10 close to an earpiece in the longitudinal direction. The camera 11 is a front camera that enables a user to take a self-portrait.

The microphone 12 is provided at the other end portion (hereinafter referred to as a "lower portion" as appropriate) close to a mouthpiece with respect to the one end portion. The speaker 13 is provided at a position corresponding to the earpiece, for example.

The display section 16 is realized as a touch screen integrated with an operation section 15 (see Fig. 2) described later, and has a rectangular shape. The touch screen detects a touch operation of the user. As a detection method of the touch screen, any of known methods is used such as a capacitance method, a resistive film method, a surface acoustic wave method (or an ultrasonic method), an infrared method, an electromagnetic induction method, and a load detection method.

When the music production application is executed in the smartphone 10, the touch screen displays various User Interfaces (UIs) related to the music production application. In addition, the touch screen detects a touch operation of the user on the UI.

The camera 11 captures an image of a case where an operation to start video recording is performed in the music production application, for example, a scene in which the user sings to the accompaniment of a musical instrument. In addition, in a case where an operation to start video recording is similarly performed, the microphone 12 collects sound emitted from a sound source (for example, the user or a musical instrument) to cause the sound to be recorded as sound source data of a prespecified track type at the time of video recording. In addition, in a case where an operation of reproducing sound source data is performed in the music production application, the speaker 13 outputs the sound source data selected at the time of reproduction.

Note that, at the time of such reproduction, the music production application can adjust various parameters such as the volume of each track and the level of reverb in accordance with the operation of the user. The "volume" in this parameter adjustment may be labeled "Volume" in the drawings described later. Similarly, "reverb" may be labeled "Reverb".

Incidentally, conventional music production applications have room for further improvement in terms of further enhancing convenience when the user produces music content with video.

As described above, in recent years, the processing capability of portable information processing apparatuses including the smartphone 10 has been rapidly improved, and the user can easily privately produce music content with video using a music production application. In addition, the user correspondingly has increasing opportunities to publish music content with video by using, for example, an SNS, a video streaming service, or the like.

Thus, in recent years, there has been an increasing need for the user to easily produce high-quality music content with video by using a UI that is easier to use and has excellent operability when the user privately produces music content with video. The "high quality" mentioned here refers to, for example, improved sound quality, high synchronization between audio and video, and the like.

In actuality, the UI of the conventional music production application is not sufficiently expanded to meet such needs. In particular, for equipment such as the smartphone 10 in which the display section 16 is smaller in size than a display of a general personal computer, the music production application has room for improvement in operability.

Thus, in the information processing method according to the present embodiment, the smartphone 10 is intended to execute the sound quality enhancement processing for the sound source data to be enhanced in sound quality in a case where the sound source data is selected from the recorded video data by the user via the music production application. In addition, the smartphone 10 is intended to display, on the display section 16, an operation component related to an editing function so as to enable consistent editing of the sound source data including a case of having been subjected to the sound quality enhancement processing and the video data included in the recorded video data.

In the information processing method according to the present embodiment, the smartphone 10 causes the display section 16 to display the operation component that enables collective or individual editing of the sound source data subjected to the sound quality enhancement processing in some cases and the video data. The above-described "enable consistent editing" refers to enabling the sound source data and the video data to be consistently edited in an overall manner while executing the sound quality enhancement processing, a trimming function described later, and the like using the operation component that enables collective or individual editing as described above.

As illustrated in Fig. 1, the smartphone 10 first executes a music production application with a video recording function (step S1). In a case where the user uses the sound quality enhancement function in the music production application, the smartphone 10 transmits, to the server apparatus 100, sound source data selected from the recorded video data as a target for the sound quality enhancement processing (step S2).

At this time, an option is specified for the selected sound source data. Examples of the option include "sound source separation" for separating a plurality of different sound sources in one sound source data recorded using the microphone 12, "noise removal" for removing noise, "dereverberation" for removing unnecessary reverberation, and the like. Other examples of the option include "microphone simulation" for reproducing the microphone characteristics of a high-performance microphone, and "studio simulation" for adding a unique echo of a recording studio or the like.

The server apparatus 100 is an apparatus designed to be able to communicate with the smartphone 10 via a network N such as a mobile phone network or the Internet. The server apparatus 100 is realized as, for example, a cloud server.

The server apparatus 100 includes a sound quality enhancement processing model 102a (see Fig. 3), and is designed to be able to execute the sound quality enhancement processing using the sound quality enhancement processing model 102a. The sound quality enhancement processing model 102a is, for example, a Deep Neural Network (DNN) model trained using a deep learning algorithm.

The server apparatus 100 executes the sound quality enhancement processing on the sound source data acquired from the smartphone 10 by an Artificial Intelligence (AI) processing using the sound quality enhancement processing model 102a (step S3). The server apparatus 100 then transmits, to the smartphone 10, the data subjected to the sound quality enhancement processing, and the smartphone 10 receives the data (step S4).

Note that, when the server apparatus 100 uses the cloud server model to integrally execute the sound quality enhancement processing with a high processing load, the smartphone 10 can continue to use the music production application or execute another application even during the sound quality enhancement processing without affecting the sound quality enhancement processing.

Then, the smartphone 10 executes the editing function through a UI that enables the sound source data and the video data to be consistently edited (step S5). Specifically, the smartphone 10 provides a UI related to a trimming function of collectively trimming the sound source data and the video data, for example, so as to make the sound source data and the video data consistent with each other. The smartphone 10 provides a UI for individually changing or moving the sound source data with respect to the video data, for example, so as to make the sound source data and the video data consistent with each other.

The smartphone 10 provides these UIs in such a manner that the UIs are easy for the user to intuitively operate and are easy to use even in equipment such as the smartphone 10 in which the display section 16 has relatively small size. Note that the smartphone 10 also provides a UI for guidance related to a video recording method, and the like, so as to easily enhance the sound quality of a vocal sound source when the user sings to the accompaniment of a musical instrument, for example.

Specific examples of these various UIs in the present embodiment will be discussed later in the description using Figs. 4 to 31.

### 2. Configuration Example of Smartphone

Now, a configuration example of the smartphone 10 will be described. Fig. 2 is a block diagram illustrating a configuration example of the smartphone 10 according to an embodiment of the present disclosure. Note that Figs. 2 and 3 described below illustrate only constituent elements necessary for describing the features of the present disclosure, and the description of general constituent elements is omitted.

In other words, the constituent elements illustrated in Figs. 2 and 3 are illustrated as functional concepts and are not necessarily physically configured as illustrated in the drawings. For example, specific aspects of the distribution and integration of the blocks are not limited to those illustrated in the drawings. All or some of the blocks may be configured to be functionally or physically distributed or integrated in any unit in accordance with various types of loads, usage conditions, and the like.

In the description with reference to Figs. 2 and 3, the description of constituent elements that have already been described may be simplified or omitted.

As illustrated in Fig. 2, the smartphone 10 includes a camera 11, a microphone 12, a speaker 13, a communication section 14, an operation section 15, a display section 16, a storage section 17, and a control section 18.

The camera 11, the microphone 12, and the speaker 13 have been described above, and thus the description thereof will be omitted here. The communication section 14 is realized by a communication module or the like. The communication section 14 is wirelessly connected to the network N described above, and realizes communication with the server apparatus 100 via the network N.

The operation section 15 is an operation component mounted on the smartphone 10, and is realized by, for example, a touch panel. The display section 16 is a display component mounted on the smartphone 10, and is realized by, for example, a display.

Note that the operation section 15 and the display section 16 are integrated, for example, to constitute the touch screen described above. Therefore, the operation section 15 may be a software component displayed on the display section 16, or may be, for example, a Graphical User Interface (GUI) that is operably displayed on the display section 16 by the music production application.

The storage section 17 is realized by a semiconductor memory element such as a Random Access Memory (RAM), a Read Only Memory (ROM), and a Flash Memory. In the example illustrated in Fig. 2, the storage section 17 stores application information 17a, video recording information 17b, and editing information 17c.

The application information 17a is information including a program of the music production application, various parameters used during the operation of the music production application, and the like.

The video recording information 17b is information including recorded video data which is recorded by the video recording function of the music production application. The recorded video data includes recorded video data captured by the camera 11. In addition, the recorded video data includes recorded sound source data collected by the microphone 12.

The editing information 17c is information including music content with video that is being edited or has been edited by the user using the editing function of the music production application.

Note that the music production application according to the present embodiment performs video recording and audio recording at the same time in MP4, but the recorded audio data in MP4 is compressed by Advanced Audio Coding (AAC), and therefore the music production application separately stores the sound source data in uncompressed RIFF waveform Audio Format (WAV). The music production application performs the sound quality enhancement processing, parameter adjustment processing, and the like on the sound source data in the WAV format, and converts the sound source into the AAC format when the sound source is written, thereby generating an MP4 sound.

The control section 18 corresponds to a so-called processor or controller. The control section 18 is realized, for example, by a Central Processing Unit (CPU), a Micro Processing Unit (MPU), a Graphics Processing Unit (GPU), or the like by executing a program according to the present embodiment stored in the storage section 17, using the RAM as a work area. In addition, the control section 18 may be realized, for example, by an integrated circuit such as an Application Specific Integrated Circuit (ASIC) and a Field Programmable Gate Array (FPGA).

The control section 18 includes an application execution section 18a, a display control section 18b, and a communication control section 18c, and realizes or executes functions and operations for information processing described below.

The application execution section 18a imports the application information 17a stored in the storage section 17 and executes the music production application. The application execution section 18a executes the sound quality enhancement processing in accordance with, for example, the operation content input through the operation section 15 during the execution of the sound quality enhancement processing in the music production application. The application execution section 18a executes the editing function in accordance with, for example, the operation content input through the operation section 15 during execution of the editing function in the music production application.

The application execution section 18a causes the display control section 18b to perform display control of visual information including various UIs in accordance with various operation contents provided when the music production application is executed that includes the sound quality enhancement processing and the editing function. Specific examples of various UIs in the music production application according to the present embodiment will be discussed later in the description with reference to Figs. 4 to 31.

On the basis of an instruction from the application execution section 18a, the display control section 18b controls the display of visual information on the display section 16 when the music production application is executed. The communication control section 18c performs communication control for the server apparatus 100 when the music production application is executed.

The communication control section 18c transmits, for example, sound source data to be subjected to the sound quality enhancement processing to the server apparatus 100 via the communication section 14. In addition, the communication control section 18c receives, for example, data, subjected to the sound quality enhancement processing, on which the sound quality enhancement processing is performed in the server apparatus 100, from the server apparatus 100 via the communication section 14.

### 3. Configuration Example of Server Apparatus

Now, a configuration example of the server apparatus 100 will be described. Fig. 3 is a block diagram illustrating a configuration example of the server apparatus 100 according to an embodiment of the present disclosure.

As illustrated in Fig. 3, the server apparatus 100 includes a communication section 101, a storage section 102, and a control section 103.

The communication section 101 is realized by a communication module or the like, similarly to the communication section 14 described above. The communication section 101 is connected to the network N in a wired or wireless manner, and realizes communication with the smartphone 10 via the network N.

The storage section 102 is realized by, for example, a semiconductor memory element such as a RAM, a ROM, or a flash memory, similarly to the storage section 17 described above. In addition, the storage section 102 is realized by a disk apparatus such as a hard disk apparatus or an optical disk apparatus. In the example illustrated in Fig. 3, the storage section 102 stores a sound quality enhancement processing model 102a.

As described above, the sound quality enhancement processing model 102a is a DNN model trained using, for example, a deep learning algorithm. The learning algorithm of the sound quality enhancement processing model 102a is not limited to deep learning. The sound quality enhancement processing model 102a is imported by a sound quality enhancement processing section 103b described later, and in a case where sound source data to be processed is input, the sound quality enhancement processing model 102a performs the sound quality enhancement processing on the sound source data with specified setting contents (option), and outputs the data subjected to the sound quality enhancement processing.

The control section 103 corresponds to a so-called processor or controller, similarly to the control section 18 described above. The control section 103 is implemented by, for example, a CPU, an MPU, a GPU, or the like executing various programs (not illustrated) stored in the storage section 102 using a RAM as a work area. In addition, the control section 103 can be realized by an integrated circuit such as an ASIC or an FPGA.

The control section 103 includes an acquisition section 103a, a sound quality enhancement processing section 103b, and a transmission section 103c, and realizes or executes functions and operations for information processes described below.

The acquisition section 103a obtains, via the communication section 101, the option of the sound quality enhancement processing specified in the smartphone 10 and the sound source data to be processed. The acquisition section 103a outputs the acquired data to the sound quality enhancement processing section 103b.

The sound quality enhancement processing section 103b imports the sound quality enhancement processing model 102a from the storage section 102, and inputs, to the sound quality enhancement processing model 102a, each of the data received from the acquisition section 103a. In addition, the sound quality enhancement processing section 103b acquires the data subjected to the sound quality enhancement processing and output from the sound quality enhancement processing model 102a, and outputs the data to the transmission section 103c.

The transmission section 103c transmits, to the smartphone 10 via the communication section 101, the data subjected to the sound quality enhancement processing and received from the sound quality enhancement processing section 103b.

### 4. Specific Examples of Various UIs at Time of Production of Music Content with Video

Now, specific examples of various UIs at the time of production of music content with video in the music production application according to the present embodiment will be sequentially described with reference to Figs. 4 to 31.

### 4-1. Basic Example

### 4-1-1. At Time of Recording

First, an example of a UI at the time of video recording will be described. Figs. 4 to 12 are diagrams (part 1) to (part 9) illustrating examples of the UI at the time of video recording.

The display control section 18b can cause the display section 16 to display a project list screen as illustrated in Fig. 4. The project list screen displays a list of projects produced by the user so far. With an "Audio" tab selected, a list of projects based on sound source data recorded using only the microphone 12 is displayed. On the other hand, with a "Video" tab T1 selected, a list of projects based on recorded video data which is recorded by using the camera 11 and the microphone 12 is displayed.

The project list screen displays a button B1 for adding a new project indicated by "+ New Project". When the user performs touch operation on the button B1, a dialog is displayed to ask whether the new project is based on "Audio" (audio recording) or "Video" (video recording). Then, for video recording, when the user selects a "Video" button B2, inputs a project name in a subsequently displayed new project creation dialog, and performs a touch operation on an "OK" button B3, a new project based on video recording is generated.

In the video recording screen in the new project based on video recording, as illustrated in Fig. 5, a preview screen of the camera 11 is displayed in a preview region R1. Basically, when the user performs touch operation on a video recording button B4 on the video recording screen, video recording is started.

Note that, in a case where the user sings to the accompaniment of a musical instrument, for enhanced sound quality of sound recorded by video recording, the recording needs to be performed at such a position that the microphone 12 is not very far from a sound source (vocal or musical instrument) of the sound to be recorded. At the same time, in the case of singing to the accompaniment of the musical instrument, the sound of the musical instrument tends to be louder, and therefore, the microphone is desirably placed closer to the vocal position than the musical instrument.

Specifically, as illustrated in Fig. 6, a case is assumed in which the user U1 sings to the accompaniment of a guitar. Here, when, for video recording, the smartphone 10 is set in a normal orientation (the camera 11 side is placed above and the microphone 12 side is placed below) as illustrated in the upper diagram of Fig. 6, the guitar is less likely to be reflected within the angle of view AV1 of the camera 11. In addition, since the microphone 12 faces downward, the sound of the guitar may be recorded louder than the sound of the vocal at the vocal position VP1.

In order to solve this problem, it is desirable to rotate the smartphone 10 by 180 degrees. When the smartphone 10 is turned upside down, the guitar is likely to be reflected within the angle of view AV1 of the camera 11 as illustrated in the lower diagram of Fig. 6. In addition, since the microphone 12 faces upward, the sound of the vocal at the vocal position VP1 is well captured, and the guitar is recorded quieter because the guitar is located opposite to the direction of the microphone 12. Thus, the sounds of the sound sources can be recorded in a well-balanced manner. Note that, when the volume balance is good between the vocal and the musical instrument, for example, the accuracy of sound source separation in the sound quality enhancement processing can also be improved.

The music production application according to the present embodiment can provide guidance to the user in consideration of the volume balance. To be specific, when the user performs, for example, a touch operation is performed on the button B3 illustrated in Fig. 4, the display control section 18b causes the display section 16 to display a dialog D1 for presenting guidance related to a "method of video recording of singing to the accompaniment of a musical instrument" as illustrated in a left diagram of Fig. 7.

The dialog D1 displays a button B5 used in a case where the user sings to the accompaniment of a musical instrument. When the user performs a touch operation on the button B5, the display control section 18b causes the display section 16 to display a dialog D2 for presenting guidance related to the content described with reference to Fig. 6, as illustrated in a right diagram of Fig. 7.

Then, when the user performs a touch operation on an "OK" button B6 of the dialog D2 and rotates the smartphone 10 through 180° as indicated by an arrow a1 in Fig. 8, the display control section 18b causes the display section 16 to display a dialog D3 asking whether to turn the screen display upside down.

In response, when the user selects "invert" in the dialog D3, the display control section 18b performs display control to turn the screen display upside down as illustrated in a right diagram of Fig. 8. In this manner, by providing the user with a so-called "inverted UI" as described with reference to Figs. 6 to 8, the user can be provided with guidance on an optimal video recording method in a scene of singing to the accompaniment of a musical instrument.

Note that, in a case where the user rotates the smartphone 10 through 180° from the state illustrated in the right diagram of Fig. 8, the display control section 18b may display the dialog D3 on the display section 16 again.

In addition, the display control section 18b may hide (erase) the dialog D3 in a case where the user returns the smartphone 10 to the state before the rotation without pressing "cancel" or "invert" while the dialog D3 is displayed.

In addition, during video recording, the display control section 18b need not display the dialog D3 even when the smartphone 10 is rotated.

In addition, the display of the inverted UI may be set to be interlocked with the setting of "Auto rotation" of the smartphone 10, to be forcibly inverted, or to be displayed as a dialog. In the case of interlocking with "Auto rotation" or in the case of forced inversion, the display control section 18b automatically inverts the screen display without displaying a dialog.

Subsequently, as illustrated in a left diagram of Fig. 9, the video recording screen displays a button B7 for importing an import file indicated by "+ Load track". When the user performs a touch operation on the button B7, an import file specified by the user can be imported. When the import file is imported, the waveform of the import file is displayed in a waveform display region corresponding to a note icon as illustrated in a central diagram of Fig. 9.

Then, when the user performs a touch operation on a video recording button B4, video recording is started. During video recording, as illustrated in a right diagram of Fig. 9, the audio waveform being recorded is displayed in the waveform display region corresponding to a microphone icon. In addition, during video recording, a video recording stopping button B8 is displayed on the display section 16. When the user performs a touch operation on the video recording stopping button B8, the video recording is stopped.

When the video recording is stopped, the display control section 18b causes the display of the display section 16 to transition to an editing screen as illustrated in Fig. 10. On the editing screen, a recorded video frame is displayed in a video frame display region R2, and a recorded audio track is displayed in a track display region R3.

Note that a re-audio recording button B9 is also displayed on the editing screen. When the user performs a touch operation on the button B9, the display returns to the state illustrated in the central diagram of Fig. 9. When the user performs a touch operation on the video recording button B4, the recording can be redone. Overdubbing is disabled.

Note that, when a touch operation is performed on the re-audio recording button B9 in the state illustrated in Fig. 10, a dialog D4 asking the user about the mode of re-video recording is displayed unless the sound quality enhancement processing has been executed, as illustrated in Fig. 11. In addition, as illustrated in Fig. 12, as long as the sound quality enhancement processing has been executed, a dialog D5 for asking the user about the mode of re-video recording is displayed in accordance with the completion of the sound quality enhancement processing.

The dialog D5 is different from the dialog D4 in that, when video data that has been recorded is discarded, the dialog D5 explicitly indicates that the deletion target includes data subjected to the sound quality enhancement processing. This is explicitly indicated to the user in consideration of the fact that the sound quality enhancement processing is a billing service.

### 4-1-2. At Time of Editing

Now, Fig. 13 is a diagram illustrating an example of a UI at the time of editing. On the editing screen, as illustrated in Fig. 13, the display control section 18b causes display of an icon I1 for adjusting the parameters of each track. Then, when the user performs a touch operation on the icon I1, the display control section 18b causes a parameter adjustment component region to be displayed in the waveform display region for each track in an overlapping manner.

As illustrated in a central diagram of Fig. 13, with a Volume tab selected by default, the display control section 18b causes a volume adjustment component region R4 to be displayed. In addition, when the user selects a Reverb tab 18b, the display control section T2 causes reverb adjustment component regions R5-1 and R5-2 to be displayed as illustrated in a right diagram of Fig. 13.

The volume adjustment component region R4 displays a slider that enables volume adjustment for each track. The reverb adjustment component region R5-1 displays a pull-down and a switch.

When the user performs a touch operation on the pull-down of the reverb adjustment component region R5-1, various presets for reverb prepared in advance are displayed. The user can set reverb on the basis of the presets by selecting any one of the presets. The entire switch for the reverb adjustment component region R5-1 is displayed as a switch that enables the entire reverb adjustment function to be set to off/on.

The reverb adjustment component region R5-2 displays a slider that enables reverb adjustment for each track and switches that enable the individual reverb adjustment function for each track to be set to off/on.

The user can easily adjust the parameters for each track by intuitive operations using the operation components displayed in the volume adjustment component region R4 and the reverb adjustment component regions R5-1 and R5-2.

### 4-1-3. At Time of Export

Now, Fig. 14 is a diagram illustrating an example of a UI at the time of export. The export refers to outputting music content with video edited via the editing screen. As illustrated in a left diagram of Fig. 14, when, on the editing screen, the user performs a touch operation on a button B10 for export indicated by "EXPORT", the display control section 18b causes the display of the display section 16 to transition to an export screen illustrated in a central diagram of Fig. 14.

Then, when the user performs a touch operation on an EXPORT button B11 on the export screen, the display control section 18b displays a dialog D6 for export as illustrated in a right diagram of Fig. 14. When the user specifies a file name and a resolution in the dialog D6 and performs a touch operation on the "EXPORT" button, an edited music content with video is output and stored in the editing information 17c.

### 4-2. Sound Quality Enhancement Processing Function

Now, an example of a UI related to the sound quality enhancement processing function will be described. Figs. 15 to 19 are diagrams (part 1) to (part 5) illustrating examples of the UI related to the sound quality enhancement processing function. As illustrated in a left diagram of Fig. 15, when, on the editing screen, the user performs a touch operation on the execution button B12 for the sound quality enhancement processing indicated by "STUDIO TUNING", the display control section 18b displays a menu M1 for allowing selection of the type of a target sound source as illustrated in a central diagram of Fig. 15.

Here, when the user, for example, selects a "vocal & guitar" button B13 and performs a touch operation on a "next" button B14, the display control section 18b causes the display section 16 to display a menu M2 for specifying options for the sound quality enhancement processing as illustrated in a right diagram of Fig. 15. When the user specifies a desired option in the menu M2 and performs a touch operation on the execute button B15, the target sound source data is transmitted to the server apparatus 100.

The, when the server apparatus 100 performs the sound quality enhancement processing and receives, from the server apparatus 100, the sound source data subjected to the sound quality enhancement processing, the display control section 18b displays the waveform of the sound source data subjected to the sound quality enhancement processing in track display regions R3-1 and R3-2 as illustrated in Fig. 16.

In Fig. 15, when the user selects, as a type of a sound source, "vocal & guitar" based on singing to the accompaniment of a musical instrument, the sound source data transmitted to the server apparatus 100 is separated into a vocal track and a guitar track by the sound source separation of the sound quality enhancement processing. Then, as illustrated in Fig. 16, the track display region R3-1 displays the waveform of the vocal track corresponding to the microphone icon. In addition, the track display region R3-2 displays the waveform of the guitar track corresponding to a guitar icon.

In addition, when the sound quality enhancement processing is executed, the display control section 18b displays the execution button B12 for the sound quality enhancement processing in a gray-out manner (see a dashed line in the drawing), and disables the execution button B12 into an inoperable state. Here, in a case where the user desires to redo the sound quality enhancement processing, then as illustrated in a left diagram of Fig. 17, when the user performs a touch operation on the waveform display region R6 for the track subjected to the sound quality enhancement processing, the display control section 18b causes the display section 16 to display a menu M3 as illustrated in a central diagram of Fig. 17.

The menu M3 includes buttons such as "change sound source", "move to left", and "move to right". Here, when the user selects the "sound source change" button B16, the display control section 18b causes the display section 16 to display a menu M4 related to the sound source change as illustrated in a right diagram of Fig. 17.

"Tuned" in the menu M4 corresponds to the sound source data subjected to the sound quality enhancement processing. "Original" corresponds to the sound source data that has yet to be subjected to the sound quality enhancement processing. When the user selects an "Original" button B17, the display control section 18b causes the waveform of the sound source data that has yet to be subjected to the sound quality enhancement processing (that is, before the sound source separation) to be displayed in the track display region R3 instead of the waveform of each track subjected to the sound quality enhancement processing, as illustrated in Fig. 18. In addition, the display control section 18b cancels the gray-out display of the execution button B12 for the sound quality enhancement processing and enables the execution button LA into an operable state. By operating the button B12, the user can redo the sound quality enhancement processing.

Note that, as illustrated in Fig. 19, in a case where a plurality of sound source data have previously been subjected to the sound quality enhancement processing, the menu M4 enables selection from the plurality of sound source data (see "Tuned (1)" and "Tuned (2)" in the figure). By selecting a desired sound source data from the menu M4 in Fig. 19, the user can change the sound source to any one of the sound source data previously subjected to the sound quality enhancement processing.

### 4-3. Trimming Function

Now, an example of a UI related to the trimming function will be described. Figs. 20 to 27 are diagrams (part 1) to (part 8) illustrating examples of the UI related to the trimming function. The trimming function according to the present embodiment is a function of specifying a portion to be cut from the head of a video frame, a recorded audio track, and an import file or a portion to be cut from the end of the video frame, the recorded audio track, and the import file, and processing only a portion to be left in music content with video produced by a user.

As illustrated in a left diagram of Fig. 20, when, on the editing screen, the user performs a touch operation on a video frame portion R7 of the video frame display region R2 (see Fig. 10), the display control section 18b causes the display section 16 to display a trimming frame Tr0 as illustrated in a right diagram of Fig. 20.

The trimming frame Tr0 is an operation component that enables the user to collectively specify, for the video frame, the recorded audio track, and the import file, a portion to be cut from the head of the video frame, the recorded audio track, and the import file or a portion to be cut from the end of the video frame, the recorded audio track, and the import file.

As illustrated in Fig. 21, when the user moves the finger to the right while keeping touching the left side of the trimming frame Tr0 or the left end portion which is the left corner of the trimming frame Tr0, the portion to be cut from the head position of the video frame, the recorded audio track, and the import file is specified according to the movement amount (specified amount) of the finger. On the other hand, although not illustrated, when the user moves the finger to the left while keeping touching the right side of the trimming frame Tr0 or the right end portion which is the right corner of the trimming frame Tr0, a portion to be cut from the end position of the video frame, the recorded audio track, and the import file is specified according to the movement amount (specified amount) of the finger.

At this time, as illustrated in a right diagram of Fig. 21, the display control section 18b displays, in a gray-out manner, the portion specified to be cut by the trimming frame Tr0 to disable the portion. Note that, when the user performs an operation of expanding the trimming frame Tr0 to the left or right, the display control section 18b can restore the disabled portion, cancel the gray-out display, and enable the portion.

As illustrated in a right diagram of Fig. 20, in a case of displaying the trimming frame Tr0, the display control section 18b hides a seek bar SK1 to prevent the seek bar SK1 from hindering the operability in the trimming function at the time of reproduction. In addition, as indicated as "15:00:00" or "14:00:00" in Fig. 21, the display control section 18b causes the length of the currently valid data to be displayed as necessary by the trimming function. In addition, a video frame corresponding to the latest position of the user's finger is displayed in the preview region R1 described above.

Such a UI enables the user to collectively and intuitively specify, for the video frame, the recorded audio track, and the import file, a portion to be cut from the head of the video frame, the recorded audio track, and the import file or a portion to be cut from the end of the video frame, the recorded audio track, and the import file.

In addition, as illustrated in Fig. 22, in a case where the import file is longer than the recorded video frame and the recorded audio track, the display control section 18b uses the trimming frame Tr0 to automatically trim and cut a portion of the import file corresponding to the difference in length between the import file and the video frame and recorded audio track.

Note that the portion cut by the trimming frame Tr0 illustrated in Figs. 21 and 22 is actually applied only to the music content with video output by the above-described export. In other words, the original data is maintained without being changed even when the original data is exported, the original data being present before trimming of the video frame, the recorded audio track, the recorded audio track subjected to the sound quality enhancement processing, and the import file recorded by the audio recording function of the music production application.

For example, as illustrated in Fig. 23, a video frame, a vocal track (Tuned Vocal track) subjected to the sound quality enhancement processing, a guitar track (Tuned Guitar track), and an import file are assumed to be in a trimming state achieved by the trimming frame Tr1.

In the trimming state, when, on the editing screen, the user taps the waveform display region R6 (see Fig. 17) for the vocal track or the guitar track subjected to the sound quality enhancement processing, the display control section 18b causes the display section 16 to display the menu M3.

Then, as illustrated in Fig. 24, when the user selects the "move to right" button B18, by moving, to the right, the vocal track or the guitar track subjected to the sound quality enhancement processing, while keeping touching the vocal track or the guitar track, the user can collectively move the positions of the tracks to the right. By this position changing operation, the user can adjust, for example, the synchronization of the recorded audio track with respect to the video frame. Note that, as illustrated in Fig. 24, even when the user performs the operation of changing the positions of the tracks subjected to the sound quality enhancement processing, the trimming state achieved by the trimming frame Tr1 is maintained.

Then, in the trimming state in Fig. 24, when the user taps the waveform display region R6 for the vocal track or the guitar track subjected to the sound quality enhancement processing, the display control section 18b displays the menu M3 on the display section 16 again as illustrated in Fig. 25.

Then, when the user selects the "sound source change" button B16, the display control section 18b displays the menu M4 related to the sound source change on the display section 16. Then, when the user selects the "Original" button B17 from the menu M4, the display control section 18b switches the display of each track subjected to the sound quality enhancement processing to the display of the sound source data (Original track) having yet to be subjected to the sound quality enhancement processing. Note that, as illustrated in Fig. 25, even when the user performs the operation of changing the sound source, the trimming state achieved by the trimming frame Tr1 is maintained. In addition, not only the trimming state achieved by the trimming frame Tr1 is maintained, but also the position changed by the "move to right" button B18 or the "move to left" button B19 (see Fig. 26) is maintained.

Then, in the trimming state in Fig. 25, when the user executes the sound quality enhancement processing as illustrated in Fig. 26, the display control section 18b switches the display of the sound source data having yet to be subjected to the sound quality enhancement processing to the display of each track subjected to the sound quality enhancement processing. At this time, the sound quality enhancement processing is also performed on the outside of the trimming frame as illustrated in Fig. 26. However, even though this sound quality enhancement processing is performed, the trimming state achieved by the trimming frame Tr1 is maintained.

Then, in this trimming state, when the user taps the waveform display region R6 for the vocal track or the guitar track subjected to the sound quality enhancement processing, the display control section 18b causes the display section 16 to display the menu M3 again.

Then, when the user selects the "move to left" button B19, by moving, to the left, the vocal track or the guitar track subjected to the sound quality enhancement processing, while keeping touching the vocal track or the guitar track, the user can collectively move, to the left, the positions of the tracks relative to the trimming frame Tr1.

At this time, since the outside of the trimming frame is also to be subjected to the sound quality enhancement processing as described above, the vocal track and the guitar track subjected to the sound quality enhancement processing involve "no data loss" in spite of the operation of changing the positions of the vocal track and the guitar track as illustrated in Fig. 26.

On the other hand, as illustrated in Fig. 27, the user is assumed to extend, in the trimming state achieved by the trimming frame Tr1, the trimming frame Tr1 toward the head position, leading to a change into the trimming state achieved by the trimming frame Tr2.

Even in this case, since the entire track including the outside of the trimming frame is to be subjected to the sound quality enhancement processing as described above, the vocal track and the guitar track subjected to the sound quality enhancement processing involve "no data loss" in spite of the operation of changing the trimming frame as illustrated in Fig. 27.

### 4-4. Shift Reproduction Function

Now, an example of a UI related to a shift reproduction function will be described. Figs. 28 to 31 are diagrams (part 1) to (part 4) illustrating examples of the UI related to the shift reproduction function. Note that the "position" in the description of the shift reproduction function may be read as "timing". The shift reproduction function according to the present embodiment is a function for enabling video recording to be started before a reproduction start position of an import file which is a karaoke sound source or the like. In other words, the shift reproduction function is a function of delaying a reproduction start timing for the import file with respect to a recording start timing in a case where video recording is performed by the video recording function while the import file is reproduced.

In a case where the shift reproduction function is not provided or the shift reproduction function is in an OFF state, when a touch operation is performed on the video recording button B4, video recording is immediately started and the reproduction of the import file is started. That is, as illustrated in "shift reproduction OFF" in Fig. 28, the "video recording start position" and the "sound source reproduction start position" for the import file correspond to the same time.

In this case, since the user needs to perform a touch operation on the video recording button B4 and then moving to an image capturing position in a hurry, there is a concern that the video recording is likely to fail. To solve this problem, the shift reproduction function enables the video recording to be started before the reproduction start position for the import file.

As indicated by "shift reproduction ON" in Fig. 28, for example, in a case where the shift reproduction is set to 4/4 time and the length of the shift reproduction is 4 bars, a reproduction start position for the import file is the beginning position of the fifth bar from the video recording start position set by the video recording button B4, with a space of 4 bars between the beginning position and the video recording start position. That is, in this case, the music production application interpolates a silent interval of 4 bars at the beginning of the import file.

This shift reproduction function eliminates the need for the user's action of performing a touch operation on the video recording button B4 and then moving to the image capturing position in a hurry, thereby reducing the chance of failures in video recording. In addition, in a case where the user desires to record, for dramatic impact, a moving action and a preparing action until the reproduction of the import file is started, the user can reliably capture images of such actions.

An example of a UI related to setting of the shift reproduction function will be described. When the user specifies the utilization of the shift reproduction function by performing a predetermined operation on the music production application, the display control section 18b causes the display section 16 to display a setting screen of the shift reproduction function as illustrated in Fig. 29.

The setting screen includes a tempo setting portion (see "Tempo" in the figure), a beat setting portion TS1, and a setting portion CI1 for setting OFF/ON of the shift reproduction function and the length of the shift reproduction. The tempo can be set by specifying an arbitrary numerical value.

The user may select and set 4/4 time, 3/4 time, 6/8 time, etc., from the setting portion TS1. For example, the user can set the 4/4 time by performing a touch operation on "4/4" illustrated in the B21 portion of the setting portion TS1.

The user can select and set the number of bars equal to or greater than one (for example, 1 bar, 2 bars, 4 bars, or 8 bars), indicating the length of the shift reproduction, from a list obtained by performing a touch operation on the setting portion CI1 for expansion.

As indicated by "shift reproduction ON" in Fig. 28, for example, in a case where the shift reproduction is set at 4/4 time and the length of the shift reproduction is 4 bars, the user selects "4/4" as the beat and selects "4 bars" as the number of bars as illustrated in the B20 and B21 portions in Fig. 29.

Note that, upon causing the display section 16 to display the setting screen for the shift reproduction function, the display control section 18b may display a dialog D7 for providing guidance on the shift reproduction function as illustrated in Fig. 30.

As illustrated in the dialog D7, the shift reproduction function is effective only in a case where an import file is present. In a case where an import file is present, the shift reproduction function may be set before the import file is imported. In a case where the shift reproduction function is set to ON before the import file is imported, a silent interval corresponding to the setting of the shift reproduction function is interpolated at the beginning of the import file when the import file is imported.

In addition, the display control section 18b may provide counting display from a touch operation on the video recording button B4 until the start of the reproduction of the import file according to the setting detail of the shift reproduction.

For example, as illustrated in Fig. 31, in a case where the shift reproduction is set at 4/4 time and the length of the shift reproduction is 4 bars, the display control section 18b provides counting display from the video recording start position at which a touch operation is performed on the video recording button B4. The count is displayed in an overlapping manner at a position that is easy to understand, such as the center of the video recording screen.

The display control section 18b provides a counting-up display from a negative value like "-4", "-3", and "-2" from the video recording start position to one bar before the sound source reproduction start position, that is, to immediately before the sound source reproduction start position, while following a set tempo. As illustrated in Fig. 31, "-4" corresponds to 4 bars before, "-3" corresponds to 3 bars before, and "-2" corresponds to 2 bars before.

In addition, the display control section 18b provides the counting-up display from "1" in one bar immediately before the sound source reproduction start position. In the case of the setting of 4/4 time in Fig. 31, the display control section 18b provides the counting-up display from 1 to 4, that is, "1", "2", "3", and "4" for each beat in accordance with the tempo.

This enables the user to reliably recognize the timing at which the import file is reproduced, and for example, to perform an appropriate preparing action or the like before the user starts playing or singing.

### 5. Variations

### 5-1. First Variation

Incidentally, the present embodiment described above may include several variations. The music production application may perform editing, for example, in such a manner as to import separately captured and edited sound source data into an "Audio" project, while intentionally refraining from recording audio data in a "Video" project and to superimpose the sound source data on the video data.

In this case, the display control section 18b may display, on the display section 16, a dialog for asking the user whether to record the sound source data in the "Video" project, whether to mute the sound source data, or the like. In addition, the display control section 18b may display a setting screen for setting whether the sound source data needs to be recorded and operation components when the "Video" project is generated, or the like.

### 5-2. Second Variation

In addition, as discussed in the above-described embodiment, the re-audio recording button B9 can be used to redo recording. However, the video data or the sound source data may exclusively be recorded again.

In this case, for example, in a case where a touch operation is performed on the re-audio recording button B9, the display control section 18b may display, on the display section 16, a dialog for having the user select the video data and the sound source data, only the video data, or only the sound source data as a target to be recorded again, or the like.

### 5-3. Third Variation

In addition, as discussed in the above-described embodiment, the sound quality enhancement processing is executed by the server apparatus 100 that is a cloud server. However, a smaller amount of data is desirably processed.

Thus, the display control section 18b may display a dialog or the like on the display section 16 to have the user select the range of the sound source data to be subjected to the sound quality enhancement processing, for example, the entire sound source data or only a trimmed portion of the sound source data.

### 5-4. Fourth Variation

In addition, in the shift reproduction function described above, the sound source reproduction start position for the import file may be enabled to be operated by a smartwatch, voice interaction, or the like. Specifically, for example, in the case of a smartwatch, when the user performs a touch operation on a video recording button displayed on the smartwatch, video recording is started. In addition, when the user performs a touch operation on a reproduction button displayed on the smart watch, reproduction of the import file is started.

### 5-5. Fifth Variation

In the above-described embodiment, as illustrated in Fig. 17, for example, when the user performs a touch operation on the waveform display region R6 for the track subjected to the sound quality enhancement processing, the display control section 18b causes the display section 16 to display the menu M3 including the buttons such as "sound source change", but this is merely an example. The mode of the menu display including the buttons such as "change sound source" is not limited to the example.

In addition, in the example discussed in the above-described embodiment, when, on the editing screen, the user performs a touch operation on the video frame portion R7, the display control section 18b causes the display section 16 to display the trimming frame Tr0 as illustrated in Fig. 20, but this is merely an example. The mode of the operation performed until the trimming frame Tr0 is displayed is not limited to such an example. For example, the trimming frame Tr0 may be displayed by being selected from a menu.

Figs. 32 to 35 are diagrams (part 1) to (part 4) illustrating examples of a UI according to the fifth variation. As illustrated in Fig. 32, when a touch operation is performed on the waveform display region R8 for the import file on the video recording screen, the display control section 18b may display a menu M5 that enables "deletion", "change", or the like of the import file.

In addition, as illustrated in Fig. 33, in a case where, on the editing screen, a touch operation is performed on the waveform display region R9 for the import file, the display control section 18b may display a menu M6 that enables "trimming", "change", "move to left", "move to right", and the like. In this case, when the user performs a touch operation on "trimming", the trimming frame Tr0 is displayed.

In addition, as illustrated in Fig. 34, in a case where, on the editing screen, a touch operation is performed on the waveform display region R10 for the recorded audio track having yet to be subjected to the sound quality enhancement processing, the display control section 18b may display a menu M7 that enables "trimming", "move to left", "move to right", and the like.

In addition, as illustrated in Fig. 35, in a case where, on the editing screen, a touch operation is performed on the waveform display region R6 for the track subjected to the sound quality enhancement processing, the display control section 18b may display a menu M8 that enables "trimming", "sound source change", "move to left", "move to right", and the like.

### 5-6. Sixth Variation

In addition, in the above-described embodiment, a front camera is used as the camera 11 for the video recording function of the music production application. However, a main camera may be used that is provided on a back side of the smartphone 10.

In a case where the main camera is used, the display control section 18b may allow the user to recognize, for example, the count of shift reproduction or the like by the flash of the main camera, the color, blinking, speed, or the like of a light-emitting diode (LED), or the like even when the display section 16 is not visible to the user during image capturing.

In addition, among the processing operations described in the above-described embodiment of the present disclosure, all or some of the processing operations described as being automatically performed can be manually performed, or all or some of the processing operations described as being manually performed can be automatically performed by a known method. In addition, the processing procedures, specific names, and information including various data and parameters described in the above document and drawings can be arbitrarily changed unless otherwise specified. For example, the various types of information illustrated in the drawings are not limited to the illustrated information.

The constituent elements of the devices illustrated in the drawings are functionally conceptual and are not necessarily physically configured as illustrated in the drawings. That is, specific forms of distribution and integration of the apparatuses are not limited to those illustrated in the drawings, and all or some of the apparatuses may be configured to be functionally or physically distributed or integrated in any unit according to various loads, usage conditions, and the like.

The above-described embodiments of the present disclosure can be appropriately combined, as long as the processing contents do not contradict each other. In addition, the order in steps illustrated in the sequence diagrams or flowcharts of the present embodiments can be changed as appropriate.

### 6. Hardware Configuration

In addition, the smartphone 10 and the server apparatus 100 according to the present disclosure described above are realized by, for example, a computer 1000 configured as illustrated in Fig. 36. The smartphone 10 will be described as an example. Fig. 36 is a hardware configuration diagram illustrating an example of the computer 1000 that implements the functions of the display smartphone 10. The computer 1000 includes a CPU 1100, a RAM 1200, a ROM 1300, a secondary storage device 1400, a communication interface 1500, and an input/output interface 1600. The units of the computer 1000 are connected together via a bus 1050.

The CPU 1100 operates based on a program stored in the ROM 1300 or the secondary storage device 1400, and controls each unit. For example, the CPU 1100 loads a program stored in the ROM 1300 or the secondary storage device 1400 onto the RAM 1200 and executes processing corresponding to the various types of programs.

The ROM 1300 stores a boot program such as a basic input output system (BIOS) executed by the CPU 1100 at the time of activation of the computer 1000, a program depending on hardware of the computer 1000, and the like.

The secondary storage device 1400 is a computer-readable recording medium that non-transitorily stores a program executed by the CPU 1100, data used by the program, and the like. Specifically, the secondary storage device 1400 is a recording medium that records a program according to the embodiment of the present disclosure corresponding to the application information 17a, which is an example of program data 1450.

The communication interface 1500 is an interface used for connecting the computer 1000 to an external network 1550. For example, the CPU 1100 receives data from other devices or transmits data generated by the CPU 1100 to other devices, via the communication interface 1500.

The input/output interface 1600 is an interface for connecting the input/output device 1650 and the computer 1000. For example, the CPU 1100 receives data from input devices such as a microphone and a touch panel via the input/output interface 1600. The CPU 1100 also transmits data to an output device such as a display or speakers via the input/output interface 1600. In addition, the input/output interface 1600 may function as a media interface that reads a program or the like recorded in a predetermined recording medium. The medium is, for example, an optical storage medium such as a digital versatile disc (DVD) or a phase change rewritable disk (PD), a magneto-optical storage medium such as a magneto-optical disk (MO), a tape medium, a magnetic storage medium, a semiconductor memory, or the like.

For example, when the computer 1000 functions as the smartphone 10 according to the embodiment of the present disclosure, the CPU 1100 of the computer 1000 executes the program loaded onto the RAM 1200 to implement the functions of the control section 18 and the like. In addition, the secondary storage apparatus 1400 stores a program according to the present disclosure and data in the storage section 17. Note that the CPU 1100 reads and executes the program data 1450 from the secondary storage device 1400. However, in another example, the CPU may acquire a program from another device via the external network 1550.

### 7. Conclusion

As described above, according to an embodiment of the present disclosure, the smartphone 10 (corresponding to an example of an "information processing apparatus") includes the display section 16, and the control section 18. In a case where a music production application (corresponding to an example of an "application having a video recording function provided by a camera and a microphone and an editing function for recorded video data provided by the video recording function") is executed, the display section 16 displays visual information related to the music production application. The control section 18 executes the music production application, and in a case where the user selects sound source data to be enhanced in sound quality, from the recorded video data via the music production application, executes sound quality enhancement processing on the selected sound source data, and causes the display section 16 to display an operation component related to the editing function so as to enable consistent editing of the sound source data including a case of having been subjected to the sound quality enhancement processing and the video data included in the recorded video data. This can improve convenience when the user produces music content with video.

Although the embodiments of the present disclosure have been described above, the technical scope of the present disclosure is not limited to the above-described embodiments, and various modifications can be made without departing from the gist of the present disclosure. Furthermore, the components of different embodiments and modifications may be appropriately combined.

The effects of the embodiments described in the present specification are merely examples and are not limited, and other effects may be produced.

Note that the present technology can also adopt the following configurations.
(1) An information processing apparatus including:
   a display section configured to display visual information related to an application having a video recording function by a camera and a microphone and an editing function for recorded video data by the video recording function in a case where the application is executed; and
   a control section configured to:
      execute the application;
      in a case where a user selects sound source data to be enhanced in sound quality, from the recorded video data via the application, execute sound quality enhancement processing on the sound source data selected; and
      cause the display section to display an operation component related to the editing function to enable the sound source data including a case of having been subjected to the sound quality enhancement processing and video data included in the recorded video data to be consistently edited.
(2) The information processing apparatus according to (1), wherein the control section causes the display section to display the operation component to enable the video data and the sound source data to be collectively or individually edited.
(3) The information processing apparatus according to (1) or (2), wherein the control section causes the display section to display the operation component to enable a plurality of pieces of the sound source data to be collectively or individually edited.
(4) The information processing apparatus according to (1), (2), or (3), wherein the sound source data includes an import file using a sound source that is not targeted for audio recording by the video recording function.
(5) The information processing apparatus according to (4), wherein the control section causes the display section to display a trimming frame that enables a trimming range for the video data and the sound source data to be collectively specified.
(6) The information processing apparatus according to (5), wherein the control section specifies a portion to be cut from a head position of the video data and the sound source data according to an amount, specified by the user, from a left end portion of the trimming frame to right, and specifies a portion to be cut from an end position of the video data and the sound source data according to an amount specified from a right end portion of the trimming frame to left.
(7) The information processing apparatus according to (5) or (6), wherein in a case where a data length of the import file is greater than a length of the video data and the sound source data, the control section automatically cuts an end portion of the import file by the trimming frame according to the length of the video data and the sound source data.
(8) The information processing apparatus according to (5), (6), or (7), wherein the control section causes the display section to display the operation component that enables the sound source data to be changed while maintaining a state of trimming by the trimming frame.
(9) The information processing apparatus according to any one of (5) to (8), wherein the control section causes the display section to display the operation component that enables the position of the sound source data relative to the video data to be moved while maintaining the state of trimming by the trimming frame.
(10) The information processing apparatus according to any one of (5) to (9), wherein the control section is capable of executing the sound quality enhancement processing with an entirety of the sound source data to be processed, while maintaining the state of trimming by the trimming frame.
(11) The information processing apparatus according to any one of (1) to (10), wherein the control section causes the display section to display a dialog for providing guidance on arrangement of the camera and the microphone in a case where the user sings with an instrument.
(12) The information processing apparatus according to (11), wherein the control section provides guidance on arrangement of the microphone to increase a vocal volume.
(13) The information processing apparatus according to (11) or (12), wherein in a case where the user rotates a main body on which the camera and the microphone are mounted, according to the guidance on the arrangement, the control section rotates a display related to the application in the display section, according to the rotation of the main body.
(14) The information processing apparatus according to (13), wherein in a case of detecting that the main body has been rotated according to the guidance on the arrangement, the control section causes the display section to display a dialog for asking the user whether the display related to the application needs to be rotated.
(15) The information processing apparatus according to (4), wherein in a case of performing video recording by the video recording function, while reproducing the import file, the control section is capable of executing a shift reproduction function of delaying a reproduction start timing for the import file relative to a video recording start timing.
(16) The information processing apparatus according to (15), wherein in a case of executing the shift reproduction function, the control section interpolates, at a beginning of the import file, a silent interval corresponding to a setting related to the shift reproduction function.
(17) The information processing apparatus according to (16), wherein the control section causes the display section to provide, in the silent interval, a counting-up display corresponding to a setting related to the shift reproduction function.
(18) The information processing apparatus according to (17), wherein the control section causes the display section to provide the counting-up display on a per-bar basis in the silent interval and to provide the counting-up display on a per-beat basis in one bar immediately before the reproduction start timing for the import file.
(19) The information processing apparatus according to any one of (1) to (18), wherein the information processing apparatus is portable.
(20) An information processing method executed by an information processing apparatus, the information processing method including:
   displaying visual information related to an application having a video recording function by a camera and a microphone and an editing function for recorded video data by the video recording function in a case where the application is executed;
   executing the application;
   in a case where a user selects sound source data to be enhanced in sound quality, from the recorded video data via the application, executing sound quality enhancement processing on the sound source data selected; and
   displaying an operation component related to the editing function to enable the sound source data including a case of having been subjected to the sound quality enhancement processing and video data included in the recorded video data to be consistently edited.
(21) A program for causing a computer to:
   display visual information related to an application having a video recording function by a camera and a microphone and an editing function for recorded video data by the video recording function in a case where the application is executed;
   execute the application;
   in a case where a user selects sound source data to be enhanced in sound quality, from the recorded video data via the application, execute sound quality enhancement processing on the sound source data selected; and
   display an operation component related to the editing function to enable the sound source data including a case of having been subjected to the sound quality enhancement processing and video data included in the recorded video data to be consistently edited.
(22) A computer-readable recording medium having recorded thereon a program for causing a computer to:
   display visual information related to an application having a video recording function by a camera and a microphone and an editing function for recorded video data by the video recording function in a case where the application is executed;
   execute the application;
   in a case where a user selects sound source data to be enhanced in sound quality, from the recorded video data via the application, execute sound quality enhancement processing on the sound source data selected; and
   display an operation component related to the editing function to enable the sound source data including a case of having been subjected to the sound quality enhancement processing and video data included in the recorded video data to be consistently edited.

### Reference Signs List

- 1: Information processing system
- 10: Smartphone
- 11: Camera
- 12: Microphone
- 13: Speaker
- 14: Communication section
- 15: Operation section
- 16: Display section
- 17: Storage section
- 17a: Application information
- 17b: Video recording information
- 17c: Editing information
- 18: Control section
- 18a: Application execution section
- 18b: Display control section
- 18c: Communication control section
- 100: Server apparatus
- 101: Communication section
- 102: Storage section
- 102a: Sound quality enhancement processing model
- 103: Control section
- 103a: Acquisition section
- 103b: Sound quality enhancement processing section
- 103c: Transmission section

## Claims

1. An information processing apparatus comprising:
a display section configured to display visual information related to an application having a video recording function by a camera and a microphone and an editing function for recorded video data by the video recording function in a case where the application is executed; and
a control section configured to
execute the application,
in a case where a user selects sound source data to be enhanced in sound quality, from the recorded video data via the application, execute sound quality enhancement processing on the sound source data selected, and
cause the display section to display an operation component related to the editing function to enable the sound source data including a case of having been subjected to the sound quality enhancement processing and video data included in the recorded video data to be consistently edited.

2. The information processing apparatus according to claim 1, wherein the control section causes the display section to display the operation component to enable the video data and the sound source data to be collectively or individually edited.

3. The information processing apparatus according to claim 1, wherein the control section causes the display section to display the operation component to enable a plurality of pieces of the sound source data to be collectively or individually edited.

4. The information processing apparatus according to claim 1, wherein the sound source data includes an import file using a sound source that is not targeted for audio recording by the video recording function.

5. The information processing apparatus according to claim 4, wherein the control section causes the display section to display a trimming frame that enables a trimming range for the video data and the sound source data to be collectively specified.

6. The information processing apparatus according to claim 5, wherein the control section specifies a portion to be cut from a head position of the video data and the sound source data according to an amount, specified by the user, from a left end portion of the trimming frame to right, and specifies a portion to be cut from an end position of the video data and the sound source data according to an amount specified from a right end portion of the trimming frame to left.

7. The information processing apparatus according to claim 5, wherein in a case where a data length of the import file is greater than a length of the video data and the sound source data, the control section automatically cuts an end portion of the import file by the trimming frame according to the length of the video data and the sound source data.

8. The information processing apparatus according to claim 5, wherein the control section causes the display section to display the operation component that enables the sound source data to be changed while maintaining a state of trimming by the trimming frame.

9. The information processing apparatus according to claim 5, wherein the control section causes the display section to display the operation component that enables the position of the sound source data relative to the video data to be moved while maintaining a state of trimming by the trimming frame.

10. The information processing apparatus according to claim 5, wherein the control section is capable of executing the sound quality enhancement processing with an entirety of the sound source data to be processed, while maintaining a state of trimming by the trimming frame.

11. The information processing apparatus according to claim 1, wherein the control section causes the display section to display a dialog for providing guidance on arrangement of the camera and the microphone in a case where the user sings with an instrument.

12. The information processing apparatus according to claim 11, wherein the control section provides guidance on arrangement of the microphone to increase a vocal volume.

13. The information processing apparatus according to claim 11, wherein in a case where the user rotates a main body on which the camera and the microphone are mounted, according to the guidance on the arrangement, the control section rotates a display related to the application in the display section, according to the rotation of the main body.

14. The information processing apparatus according to claim 13, wherein in a case of detecting that the main body has been rotated according to the guidance on the arrangement, the control section causes the display section to display a dialog for asking the user whether the display related to the application needs to be rotated.

15. The information processing apparatus according to claim 4, wherein in a case of performing video recording by the video recording function, while reproducing the import file, the control section is capable of executing a shift reproduction function of delaying a reproduction start timing for the import file relative to a video recording start timing.

16. The information processing apparatus according to claim 15, wherein in a case of executing the shift reproduction function, the control section interpolates, at a beginning of the import file, a silent interval corresponding to a setting related to the shift reproduction function.

17. The information processing apparatus according to claim 16, wherein the control section causes the display section to provide, in the silent interval, a counting-up display corresponding to a setting related to the shift reproduction function.

18. The information processing apparatus according to claim 17, wherein the control section causes the display section to provide the counting-up display on a per-bar basis in the silent interval and to provide the counting-up display on a per-beat basis in one bar immediately before the reproduction start timing for the import file.

19. The information processing apparatus according to claim 1, wherein the information processing apparatus is portable.

20. An information processing method executed by an information processing apparatus, the information processing method comprising:
displaying visual information related to an application having a video recording function by a camera and a microphone and an editing function for recorded video data by the video recording function in a case where the application is executed;
executing the application;
in a case where a user selects sound source data to be enhanced in sound quality, from the recorded video data via the application, executing sound quality enhancement processing on the sound source data selected; and
displaying an operation component related to the editing function to enable the sound source data including a case of having been subjected to the sound quality enhancement processing and video data included in the recorded video data to be consistently edited.
